# EUROPEAN PATENT APPLICATION

(11) **EP 4 424 477 A1**
(43) Date of publication of application: **04.09.2024**
(21) Application number: 23803658.6
(22) Date of filing: 31.01.2023
(51) Int. Cl.: B25J 9/16, B25J 13/08, G05D 1/02

(54) **MOVABLE ROBOT AND CONTROLLING METHOD THEREOF**

(30) Priority: 09.05.2022 KR 20220056459; 18.08.2022 KR 20220103567
(71) Applicant: Samsung Electronics Co., Ltd., Suwon-si, Gyeonggi-do 16677 (KR)
(72) Inventor: CHANG, Eunsoll, Suwon-si Gyeonggi-do 16677 (KR); KOH, Youngil, Suwon-si Gyeonggi-do 16677 (KR); KIM, Hyomuk, Suwon-si Gyeonggi-do 16677 (KR); CHOI, Mideum, Suwon-si Gyeonggi-do 16677 (KR)
(74) Representative: Gulde & Partner
(86) International application number: PCT/KR2023/001385
(87) International publication number: WO 2023/219229

(57) **Abstract**

A movable robot includes: a sensor; a motor configured to drive the movable robot; and at least one processor configured to: obtain a driving path of the movable robot, determine an amount of change in angular velocity corresponding to each of a plurality of candidate motions of the movable robot moving along the driving path based on sensing data obtained from the sensor, determine a final motion from the plurality of candidate motions based on the amount of change in angular velocity corresponding to each of the plurality of candidate motions, and control the motor to move the movable robot based on the final motion.

## Description

### [Technical Field]

Apparatuses and methods consistent with the disclosure relate to a movable robot and a controlling method thereof, and more particularly, to a movable robot which may set a driving path based on an amount of change in an angular velocity, and a controlling method thereof.

### [Description of the Related Art]

A movable robot is a device that moves along a driving path. The driving path may be a path for the robot to move to a goal. In case that an obstacle exists on the driving path, the robot may move to the goal by avoiding the obstacle. Therefore, the driving path may be changed in real time based on a surrounding environment where the robot exists.

In case of identifying the obstacle while driving, the robot may change its driving path to avoid the obstacle. The robot may consider a plurality of candidate motions to change the driving path. The robot may change the driving path by selecting a final motion among the plurality of candidate motions.

The robot may overturn a driving direction if the driving path is provided by selecting a motion having the maximum driving score in case that one of the plurality of candidate motions is selected as the final motion. The robot may collide with the obstacle or stop incorrectly in case of maintaining the driving direction while not avoiding the obstacle.

### [Disclosure]

### [Technical Solution]

The disclosure provides a movable robot which may maintain an existing driving path as much as possible by setting a driving path in consideration of an amount of change in an angular velocity, and a controlling method thereof.

A movable robot may include: a sensor; a motor configured to drive the movable robot; and at least one processor. The at least one processor may be configured to: obtain a driving path of the movable robot, determine an amount of change in angular velocity corresponding to each of a plurality of candidate motions of the movable robot moving along the driving path based on sensing data obtained from the sensor, determine a final motion from the plurality of candidate motions based on the amount of change in angular velocity corresponding to each of the plurality of candidate motions, and control the motor to move the movable robot based on the final motion.

The at least one processor may be configured to: determine state information of each of the plurality of candidate motions based on the amount of change in angular velocity corresponding to each of the plurality of candidate motions, determine classification information(or type information) of each of the plurality of candidate motions based on whether the state information of each of the plurality of candidate motions is changed, and calculate a driving score for each of the plurality of candidate motions. The at least one processor being configured to determine the final motion from the plurality of candidate motions is based on the driving score for each of the plurality of candidate motions and the classification information of each of the plurality of candidate motions.

The at least one processor may be configured to: identify state information of a previous time-point motion based on an angular velocity of the previous time-point motion. The at least one processor being configured to determine the state information of each of the plurality of candidate motions may be based on a difference between the angular velocity of the previous time-point motion and an angular velocity of each of the plurality of candidate motions. The at least one processor being configured to determine the classification information of each of the plurality of candidate motions may be based on the state information of the previous time-point motion and the state information of each of the plurality of candidate motions.

The driving score may increase in value as a movement distance of the movable robot to avoid an obstacle along any particular candidate motion of the plurality of candidate motions increases. The driving score may increase in value as a distance of the movable robot to a predicted point or a goal, in which the movable robot is positioned, after avoiding the obstacle decreases.

The at least one processor may be configured to: determine that the state information of any particular candidate motion of the plurality of candidate motions is a first state when the amount of change in angular velocity corresponding to the particular candidate motion is more than a first threshold value, determine that the state information of the particular candidate motion is a second state when the amount of change in angular velocity corresponding to the particular candidate motion is less than a second threshold value, the second threshold value being smaller than the first threshold value, and determine that the state information of the particular candidate motion is a third state when the amount of change in angular velocity corresponding to the particular candidate motion is less than or equal to the first threshold value and more than the second threshold value.

The at least one processor may be configured to: determine that the classification information of the particular candidate motion is a first classification(or type) when the state information of the particular candidate motion is changed from the first state to the second state or from the second state to the first state, and determine that the classification information of the particular candidate motion is a second classification when the state information of the particular candidate motion is changed from the first state to the third state, from the second state to the third state, from the third state to the first state, or from the third state to the second state. The first classification may be a classification in which the state information of the particular candidate motion is changed relatively rapidly compared to the second classification.

The at least one processor may be configured to determine the classification information of the particular candidate motion based on the state information of the particular candidate motion obtained within a predetermined time period.

The at least one processor may be configured to identify a first motion having the driving score of highest value from the plurality of candidate motions determined to have the first classification, identify a second motion having the driving score of highest value from the plurality of candidate motions determined to have the second classification, and determine either the first motion or the second motion to be the final motion.

The driving score of the first motion may be a first driving score. The driving score of the second motion may be a second driving score. The at least one processor may be configured to: determine the first motion to be the final motion when the first driving score is more than a sum of the second driving score and a threshold driving score, and determine the second motion to be the final motion when the first driving score is the less than or equal to the sum of the second driving score and the threshold driving score.

The at least one processor being configured control the motor to move the movable robot based on the final motion may include being configured to control the motor to move the movable robot based on a soft driving mode when the amount of change in angular velocity is changed from a positive number to a negative number or from the negative number to the positive number.

A controlling method of a movable robot may include: obtaining a driving path of the movable robot; determining an amount of change in angular velocity corresponding to each of a plurality of candidate motions of the movable robot moving along the driving path based on sensing data obtained from a sensor; determining a final motion from the plurality of candidate motions based on the amount of change in angular velocity corresponding to each of the plurality of candidate motions; and controlling the movable robot to move based on the final motion.

The method may further include: determining state information of each of the plurality of candidate motions based on the amount of change in angular velocity corresponding to each of the plurality of candidate motions, determining classification information corresponding to each of the plurality of candidate motions based on whether the state information of each of the plurality of candidate motions is changed, and calculating a driving score for each of the plurality of candidate motions. The determining the final motion from the plurality of candidate motions may be based on the driving score for each of the plurality of candidate motions and the classification information of each of the plurality of candidate motions.

The method may further include: identifying state information of a previous time-point motion is identified based on an angular velocity of the previous time-point motion. The determining the state information of each of the plurality of each of the plurality of candidate motions may be based on a difference between the angular velocity of the previous time-point motion and an angular velocity of each of the plurality of candidate motions. The determining the classification information of each of the plurality of candidate motions may be based on the state information of the previous time-point motion and the state information of each of the plurality of candidate motions.

The driving score may increase in value as a movement distance of the movable robot to avoid an obstacle along any particular candidate motion of the plurality of candidate motions increases. The driving score may increase in value as a distance of the movable robot to a predicted point or a goal, in which the movable robot is positioned, after avoiding the obstacle decreases.

The determining the state information may include: determining that the state information of any particular candidate motion of the plurality of candidate motions is a first state when the amount of change in angular velocity corresponding to the particular candidate motion is more than a first threshold value, determining that the state information of the particular candidate motion is a second state when the amount of change in angular velocity corresponding to the particular candidate motion is less than a second threshold value, the second threshold value being smaller than the first threshold value, and determining that the state information of the particular candidate motion is a third state when the amount of change in angular velocity corresponding to the particular candidate motion is less than or equal to the first threshold value and more than the second threshold value.

The determining the classification information may include: determining that the classification information of the particular candidate motion is a first classification when the state information of the particular candidate motion is changed from the first state to the second state or from the second state to the first state, and determining that the classification information of the particular candidate motion is a second classification when the state information of the particular candidate motion is changed from the first state to the third state, from the second state to the third state, from the third state to the first state, or from the third state to the second state. The first classification may be a classification in which the state information of the particular candidate motion is changed relatively rapidly compared to the second classification.

The determining the classification information of the particular candidate motion may be based on the state information of the particular candidate motion obtained within a predetermined time period.

The method may further include: identifying a first motion having the driving score of highest value from the plurality of candidate motions determined to have the first classification, and identifying a second motion having the driving score of highest value from the plurality of candidate motions determined to have the second classification. The determining the final motion may include determining either the first motion or the second motion to be the final motion.

The driving score of the first motion may be a first driving score. The driving score of the second motion may be a second driving score. The determining either the first motion or the second motion to be the final motion may include: determining the first motion to be the final motion when the first driving score is more than a sum of the second driving score and a threshold driving score, and determining the second motion to be the final motion when the first driving score is the less than or equal to the sum of the second driving score and the threshold driving score.

The controlling the movable robot to move based on the final motion may include controlling the movable robot to move based on a soft driving mode when the amount of change in angular velocity is changed from a positive number to a negative number or from the negative number to the positive number.

### [Description of Drawings]

**FIG.** 1 is a view for explaining an operation of setting a driving path of a movable robot;
FIG. 2 is a block diagram showing the movable robot according to an embodiment of the disclosure;
FIG. 3 is a block diagram for explaining a detailed configuration of the movable robot of FIG. 2;
FIG. 4 is a view for explaining an operation of calculating the driving path of the movable robot;
FIG. 5 is a flowchart showing an operation of considering an amount of change in an angular velocity in determining a motion of the movable robot;
FIG. 6 is a flowchart showing an operation of considering state information in determining a motion of the movable robot;
FIG. 7 is a flowchart showing an operation of considering classification information in determining a motion of the movable robot;
FIG. 8 is a flowchart for explaining an operation of considering a driving score in determining a motion of the movable robot;
FIG. 9 is a flowchart for explaining a process of calculating the state information;
FIG. 10 is a flowchart showing a process of calculating the classification information in various examples;
FIG. 11 is a flowchart showing a process of calculating the classification information in various examples;
FIG. 12 is a flowchart for explaining a process of identifying a final motion based on the classification information and the driving score;
FIG. 13 is a table for generally explaining a calculation process for identifying the final motion from a plurality of candidate motions based on the amount of change in the angular velocity;
FIG. 14 is a view for explaining the amount of change in the angular velocity;
FIG. 15 is a view for explaining an operation of identifying the classification information in various examples;
FIG. 16 is a view for explaining an operation of identifying the classification information in various examples;
FIG. 17 is a view for explaining an operation of identifying the classification information in various examples;
FIG. 18 is a view for explaining an operation of identifying the classification information in consideration of the amount of change in the angular velocity that is stored for a predetermined period in various examples;
FIG. 19 is a view for explaining an operation of identifying the classification information in consideration of the amount of change in the angular velocity that is stored for the predetermined period in various examples;
FIG. 20 is a view for explaining an operation of identifying the classification information in consideration of the amount of change in the angular velocity that is stored for the predetermined period in various examples;
FIG. 21 is a view for explaining an example of identifying the final motion based on the driving score;
FIG. 22 is a view for explaining a process of calculating the driving score in various examples;
FIG. 23 is a view for explaining a process of calculating the driving score in various examples;
FIG. 24 is a view for explaining a process of calculating the maximum value of the driving score in various examples;
FIG. 25 is a view for explaining an operation of identifying, as the final motion, a motion corresponding to one of an indecisive classification and a decisive classification;
FIG. 26 is a view explaining an overall operation process of selecting one motion from the plurality of candidate motions as the final motion;
FIG. 27 is a view for explaining changes in the position and angular velocity of the movable robot as the robot moves;
FIG. 28 is a flowchart for explaining the movable robot operating in a soft driving mode;
FIG. 29 is a view for comparing a normal driving mode and the soft driving mode;
FIG. 30 is a view for explaining an indicator related to the soft driving mode;
FIG. 31 is a flowchart for explaining an operation of driving the robot in the soft driving mode in various examples;
FIG. 32 is a flowchart for explaining an operation of driving the robot in the soft driving mode in various examples; and
FIG. 33 is a flowchart for explaining a controlling method of a movable robot according to another embodiment of the disclosure.

### [Mode for Invention]

Hereinafter, the disclosure is described in detail with reference to the accompanying drawings.

General terms that are currently widely used are selected as terms used in embodiments of the disclosure in consideration of functions in the disclosure, and may be changed based on the intentions of those skilled in the art or a judicial precedent, the emergence of a new technique, and the like. In addition, in a specific case, terms arbitrarily chosen by an applicant may exist. In this case, the meanings of such terms are mentioned in detail in corresponding description portions of the disclosure. Therefore, the terms used in the disclosure need to be defined on the basis of the meanings of the terms and the contents throughout the disclosure rather than simple names of the terms.

In the disclosure, an expression "have," "may have," "include," "may include" or the like, indicates the existence of a corresponding feature (for example, a numerical value, a function, an operation, or a component such as a part), and does not exclude the existence of an additional feature.

An expression, "at least one of A or/and B" may indicate either "A or B," or "both of A and B."

Expressions "first," "second," or the like, used in the disclosure may qualify various components regardless of a sequence and/or importance of the components. These expressions are used only to distinguish one component from the other components, and do not limit the corresponding components.

In case that any component (for example, a first component) is mentioned to be "(operatively or communicatively) coupled with/to" or "connected to" another component (for example, a second component), it is to be understood that the any component may be directly coupled to the another component or may be coupled to the another component through still another component (for example, a third component).

A term of a singular number may include its plural number unless explicitly indicated otherwise in the context. It is to be understood that a term "include" or "formed of" used in the specification specifies the presence of features, numerals, steps, operations, components, parts or combinations thereof, which is mentioned in the specification, and does not preclude the presence or addition of one or more other features, numerals, steps, operations, components, parts or combinations thereof.

In the disclosure, a "module" or a "-er/-or" may perform at least one function or operation, and be implemented by hardware or software, or be implemented by a combination of hardware and software. In addition, a plurality of "modules" or a plurality of "-ers/-ors" may be integrated in at least one module and implemented by at least one processor (not shown) except for a "module" or a "~er/or" that needs to be implemented by specific hardware.

In the specification, such a term as a "user" may refer to a person who uses an electronic device or a device (e.g., an artificial intelligence electronic device) which uses an electronic device (e.g., movable robot)

Hereinafter, the embodiments of the disclosure are described in detail with reference to the accompanying drawings.

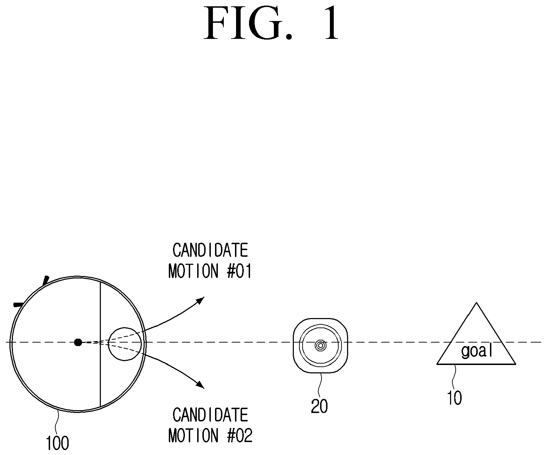

FIG. 1 is a view for explaining an operation of setting a driving path of a movable robot 100.

The movable robot 100 may move based on the driving path (or driving path information). The driving path may include at least one motion for controlling the movable robot 100. The motion may refer to information indicating the movement direction, moving velocity, rotational velocity, and the like of the movable robot. The driving path may indicate where the movable robot 100 is required to move, and a plurality of candidate motions may exist in a step of determining the driving path.

The movable robot 100 may provide (or obtain) the driving path for moving to a goal 10. The movable robot 100 may determine whether an obstacle 20 exists on the driving path. In case that the obstacle 20 exists on the driving path, the movable robot 100 may provide the driving path to avoid the obstacle 20. The movable robot 100 may determine whether to move (or rotate) to the left based on a candidate motion #1 or move (or rotate) to the right based on a candidate motion #2.

The movable robot 100 may determine one of the candidate motions as a final motion among the plurality of candidate motions based on a predetermined calculation method.

For example, in case of using a calculation method for prioritizing the maximum driving score (e.g., minimum distance), the movable robot 100 may determine, as the final motion, a motion having the maximum driving score among the candidate motion #1 and the candidate motion #2 (e.g., motion moving the minimum distance).

For another example, in case of using a calculation method for considering an amount of change in an angular velocity, the movable robot 100 may determine the final motion based on the amount of change in the angular velocity by using a calculation method for maintaining an existing driving direction as much as possible.

Meanwhile, the description describes that the movable robot 100 selects one of the candidate motions with reference to FIG. 1. The movable robot 100 may overturn the decision to avoid the obstacle 20 even after selecting one motion. For example, even after selecting the candidate motion for avoiding the obstacle 20 by moving to the left based on a direction toward the obstacle 20, the movable robot 100 may still select the candidate motion for avoiding the obstacle 20 by moving to the right. This situation is possible in case that a score difference between the candidate motion #1 in which the movable robot 100 moves to the left of the obstacle 20 and the candidate motion #2 in which the movable robot 100 moves to the right of the obstacle 20 is less than a threshold value.

Meanwhile, FIG. 1 shows the movable robot 100 as a robot cleaner, and the robot described in the disclosure may be applied to various devices that automatically move.

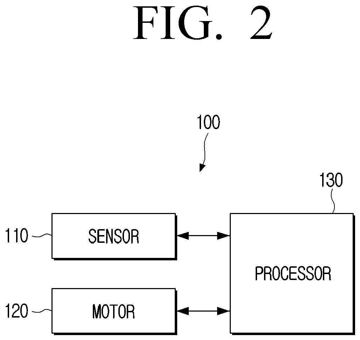

FIG. 2 is a block diagram showing the movable robot 100 according to an embodiment of the disclosure.

Referring to FIG. 2, the movable robot 100 may include a sensor 110, a motor 120, and at least one processor 130.

The sensor 110 may be a sensor detecting the velocity or angular velocity of the movable robot 100. At least one processor 130 may obtain the velocity or angular velocity of the movable robot 100 based on sensing data obtained from the sensor 110.

The sensor 110 may include an image sensor which may identify the obstacle on the driving path of the movable robot 100. At least one processor 130 may identify whether the obstacle exists based on the sensing data obtained from the sensor 110.

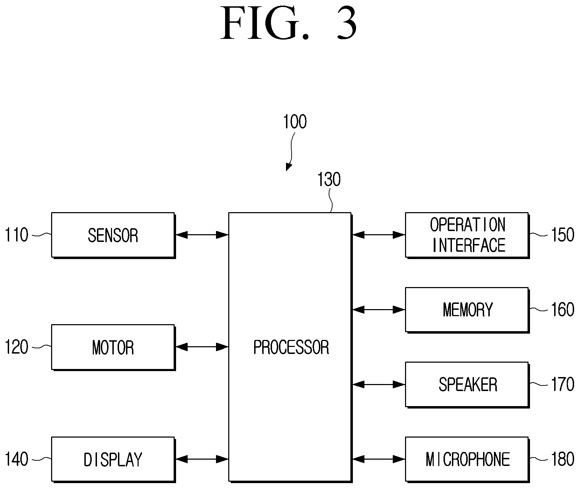

The sensor 110 may be a concept including a plurality of sensors. The sensor 110 may be described as a sensor device. A detailed description of the sensor is described with reference to FIG. 3.

The motor 120 may provide a physical force to move the movable robot 100. The motor 120 may be described as a driving device. At least one processor 130 may control the motor 120 to move the movable robot 100 based on the driving path or the final motion.

At least one processor 130 may perform an overall control operation of the movable robot 100. In detail, at least one processor 130 may function to control the overall operation of the movable robot 100.

At least one processor 130 may be implemented as a digital signal processor (DSP) that processes a digital signal, a microprocessor, or a time controller (TCON). However, at least one processor 130 is not limited thereto, and may include one or more of a central processing unit (CPU), a micro controller unit (MCU), a micro processing unit (MPU), a controller, an application processor (AP), a graphics-processing unit (GPU), a communication processor (CP) or an advanced reduced instruction set computer (RISC) machine (arm) processor, or may be defined by these terms. In addition, at least one processor 130 may be implemented as a system-on-chip (SoC) or a large scale integration (LSI), in which a processing algorithm is embedded, or may be implemented as a field programmable gate array (FPGA). In addition, at least one processor 130 may perform various functions by executing computer executable instructions stored in a memory 160.

At least one processor 130 may control the motor 120 to drive the movable robot 100.

In addition, at least one processor 130 may obtain the sensing data through the sensor 110. Here, sensor 110 may include at least one sensor.

The sensor 110 may include a first sensor for sensing data on movement of the movable robot 100 in order to set the driving path. For example, the first sensor may be the image sensor or a light detection and ranging (LIDAR) sensor. Accordingly, at least one processor 130 may obtain (or identify) the driving path based on the sensing data obtained from the first sensor.

The sensor 110 may include a second sensor for sensing physical data on the movement of the movable robot 100. For example, the second sensor may be a gyro sensor or a gyro sensor. Accordingly, at least one processor 130 may obtain (or identify) at least one of the movement position, velocity, acceleration, linear velocity, or angular velocity of the movable robot 100 based on the sensing data obtained from the second sensor.

At least one processor 130 may include at least one processor 130 obtaining the driving path of the movable robot 100, identifying the amount of change in the angular velocity corresponding to each motion of the movable robot 100 moving along the driving path based on the sensing data obtained from the sensor 110, identifying the final motion from the plurality of candidate motions based on the amount of change in the angular velocity, and controlling the motor 120 to move the movable robot 100 based on the final motion.

Here, the motion may indicate information on the movement velocity, movement direction, rotational velocity, or the like of the movable robot. The motion may include at least one of the linear velocity and the angular velocity. The motion may indicate the physical data on the movement of the movable robot 100. The motion may be described as movement data or movement information.

At least one processor 130 may obtain the sensing data from the sensor 110 while the movable robot 100 is driven. Here, the sensing data may include the angular velocity information of the movable robot 100. Accordingly, at least one processor 130 may obtain (or calculate) the amount of change in the angular velocity based on the angular velocity information of the movable robot 100. In addition, at least one processor 130 may store the obtained amount of change in the angular velocity in the memory 160. At least one processor 130 may store the amount of change in the angular velocity for a predetermined period.

The motion may be classified into a past time-point motion including data on which the movable robot 100 already completes its driving, and a future time-point motion including data on which the movable robot 100 is supposed to drive in the future.

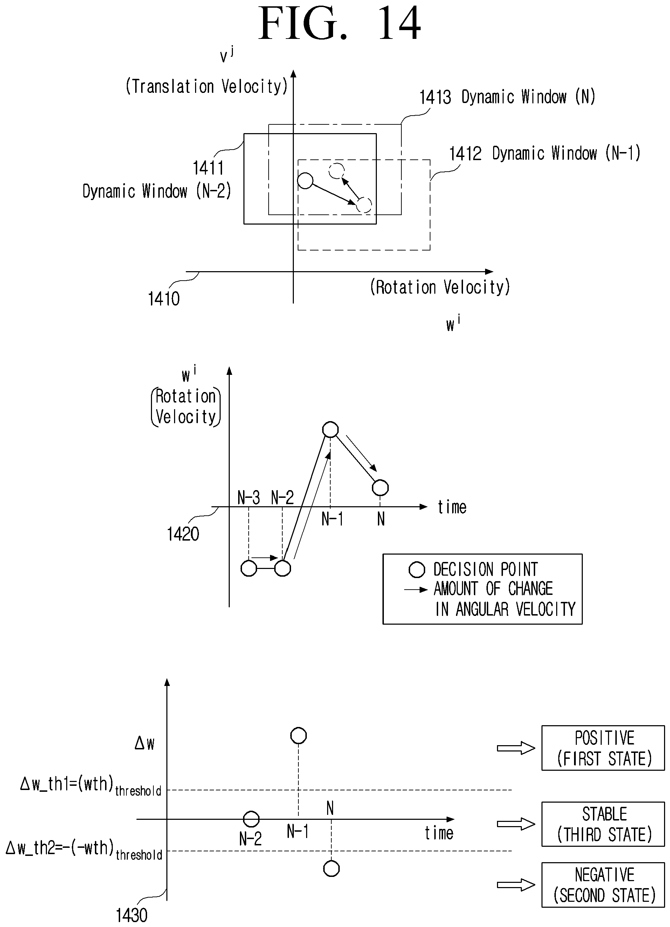

The future time-point motion may be described as the final motion. The final motion may be finally selected from the plurality of candidate motions. The candidate motion may be information including the movement direction and velocity of the movable robot 100 in the future time point. The candidate motion may be determined based on a dynamic window approach method. A description related thereto is described with reference to graph 1410 of FIG. 14. The candidate motion may include the linear velocity within a predetermined range. In addition, the candidate motion may include the angular velocity within the predetermined range.

At least one processor 130 may identify the final motion among the plurality of candidate motions based on the amount of change in the angular velocity of the movable robot 100.

Meanwhile, at least one processor 130 may identify state information of the candidate motion based on the amount of change in the angular velocity of the candidate motion, identify classification information of the candidate motion based on whether the state information is changed, obtain a driving score corresponding to the candidate motion, and identify the final motion from the plurality of candidate motions for each classification based on the driving score and the classification information.

Here, the state information may be information on a driving characteristic of the movable robot 100. Here, the driving characteristics may include a state of the amount of change in the angular velocity. That is, the state information may include the state of the amount of change in the angular velocity.

Here, the classification information may be information on a classification in which the candidate motions are classified based on a specific criterion. Here, the specific criterion may indicate whether the state information is changed. The classification information may be described as group information, and the classification may be described as a group. The classification information may be information indicating whether the candidate motion is a motion to maintain an existing movement direction (or rotation direction) or to change the existing movement direction (or rotation direction).

Here, the driving score may be a score calculated for each of the plurality of candidate motions based on the specific criterion. Here, the specific criterion could be the minimum time, the minimum movement distance, stability, or the like. Here, the stability may indicate whether the robot is safe by not colliding with the obstacle.

Meanwhile, at least one processor 130 may identify the state information of a previous time-point motion based on the angular velocity of the previous time-point motion, identify the amount of change in the angular velocity of each candidate motion based on a difference between the angular velocity of the previous time-point motion and the angular velocities of the plurality of candidate motions, and identify the classification information of the candidate motion based on the state information of the previous time-point motion and the state information of the candidate motion.

The state information may be determined based on the amount of change in the angular velocity, which is a difference between the angular velocity obtained at a previous time point N-1 and the angular velocity of the candidate motion, which is to be finally determined at a current time point N.

The state information may indicate whether the amount of change in the angular velocity has a positive or negative number.

The state information may be a first (or positive number) state in case that the amount of change in the angular velocity has the positive number. This state may indicate that the movable robot 100 moves (or rotates) faster in the existing driving direction (or rotation direction).

The state information may be a second (or negative number) state in case that the amount of change in the angular velocity has the negative number. This state may indicate that the existing driving direction (or rotation direction) of the movable robot 100 is changed.

The state information may be a third (or stable) state in case that the amount of change in the angular velocity is zero. Here, the third state may be described as a stable state or a zero state.

Here, the state information may be changed even with a slight change in case that the amount of change in the angular velocity is classified by the positive number, the negative number, or zero. Accordingly, at least one processor 130 may classify the state information into a first threshold value and a second threshold value smaller than the first threshold value.

In various examples, absolute values of the first and second threshold values may be the same as each other.

Meanwhile, at least one processor 130 may identify the state information of the candidate motion as the first (or positive number) state in case that the amount of change in the angular velocity of the candidate motion is more than the first threshold value, identify the state information of the candidate motion as the second (or negative number) state in case that the amount of change in the angular velocity of the candidate motion is less than the second threshold value smaller than the first threshold value, and identify the state information of the candidate motion as the third (stable) state in case that the amount of change in the angular velocity of the candidate motion is the first threshold value or less and more than the second threshold value. The description describes embodiments in which the state information is classified into the first (or positive number) state, the second (or negative number) state, the third (or stable) state, and the like with reference to FIGS. 14 to 17.

Meanwhile, at least one processor 130 may identify the classification information of the candidate motion as the first classification in case that the state information of the candidate motion is changed from the first (or positive number) state to the second (or negative number) state, or the state information of the candidate motion is changed from the second (or negative number) state to the first (or positive number) state, and identify the classification information of the candidate motion as the second classification in case that the state information of the candidate motion is changed from the first (or positive number) state to the third (or stable) state, the state information of the candidate motion is changed from the second (or negative number) state to the third (or stable) state, the state information of the candidate motion is changed from the third (or stable) state to the first (or positive number) state, or the state information of the candidate motion is changed from the third (or stable) state to the second (or negative number) state, and the first classification may be a classification in which the state information of the candidate motion is changed relatively rapidly compared to the second classification.

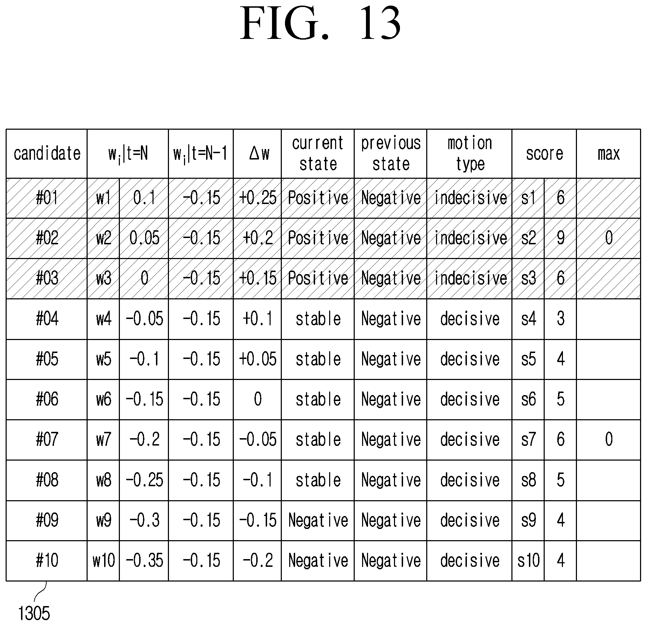

At least one processor 130 may compare predetermined state information with the state information of the candidate motion. The predetermined state information may be previous time-point state information or pre-stored state information. For example, the predetermined state information may be the "negative" state corresponding to a "previous state" in table 1305 of FIG. 13. The state information of the candidate motion may correspond to a "current state" in table 1305 of FIG. 13.

At least one processor 130 may identify the classification information of the candidate motion based on the change in the state information. At least one processor 130 may determine the classification information based on whether the predetermined state information (or state information at the previous time point) is changed.

Here, the classification information may be classified into a first classification and a second classification. The first classification may be a classification in which an existing driving characteristic is changed. The second classification may be a classification in which the existing driving characteristic is maintained.

In case that the state information is changed between the first (or positive number) state and the second (or negative number) state, at least one processor 130 may determine a classification of the candidate motion as an indecisive classification (or the first classification) indicating that the state information is rapidly changed.

In case that the state information is changed from the third (or stable) state to another state (e.g., first state or second state) or from another state (e.g., first state or second state) to the third (or stable) state, at least one processor 130 may determine a classification of the candidate motion as a decisive classification (or the second classification) indicating that the state information is maintained.

Here, the first classification may be described as the indecisive classification, and the second classification may be described as the decisive classification. The indecisive classification is different from the existing driving characteristic, and may thus indicate a classification (e.g., direction-change motion classification) in which the candidate motion is unable to be immediately determined. The decisive classification is similar to the existing driving characteristic, and may thus indicate a classification (e.g., direction-maintaining motion classification) in which that the candidate motion may be immediately determined.

Meanwhile, at least one processor 130 may identify the classification information of the candidate motion based on the state information obtained in the predetermined period.

In various examples, at least one processor 130 may directly compare the state information of an immediately previous time point and the state information of the candidate motion. The previous time point may be the time point N-1 immediately before a unit time based on the current time point N.

In various examples, at least one processor 130 may determine the predetermined state information based on the state information obtained for a predetermined time(or period). In addition, at least one processor 130 may compare the predetermined state information with the state information of the candidate motion.

In case that various state information is obtained for the predetermined time(or period), at least one processor 130 may have various criteria for determining the predetermined state information.

In various examples, in case of identifying any one of the first (or positive number) state or the second (or negative number) state in the predetermined period, at least one processor 130 may identify the predetermined state information as the identified first (or positive number) state or the identified second (or negative number) state. In addition, in case that the predetermined period includes only the third (or stable) state, at least one processor 130 may identify the predetermined state information as the third (or stable) state. In addition, in case of identifying both the first (or positive number) state and the second (or negative number) state in the predetermined period, at least one processor 130 may determine the predetermined state information as the most recently-identified state information.

In various examples, at least one processor 130 may identify, as the predetermined state information, the most identified state information among the plurality of state information included in the predetermined period.

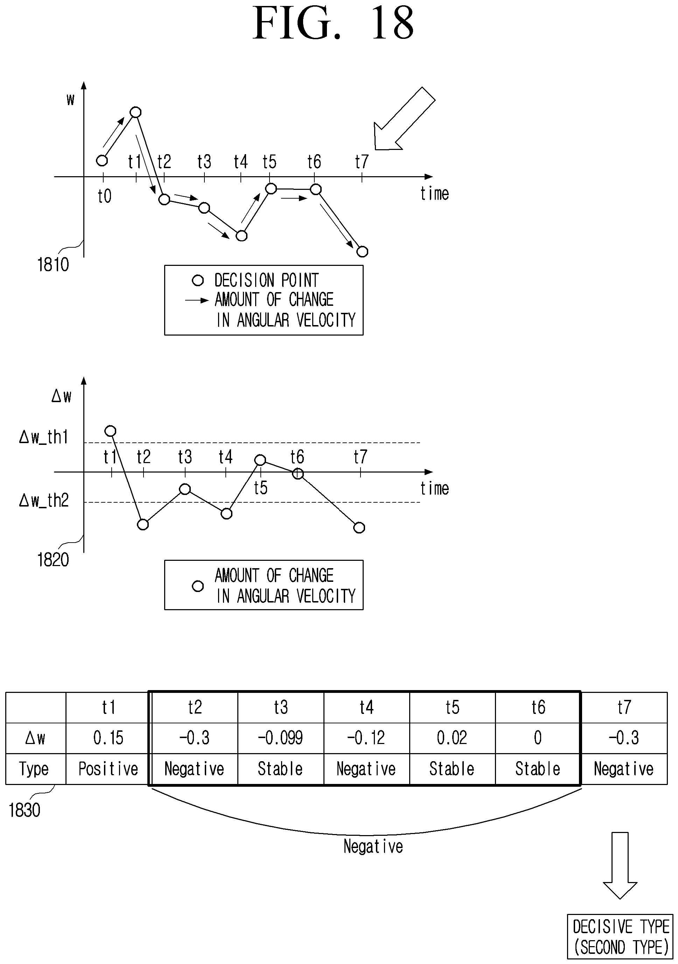

A detailed method of classifying the classification information is described with reference to FIGS. 18 to 20.

Meanwhile, the driving score may have a greater value as the movable robot 100 moving based on the candidate motion has a greater movement distance to avoid the obstacle, and may have a greater value as the movable robot 100 has a smaller distance to a predicted point or the goal, in which the movable robot is positioned, after avoiding the obstacle.

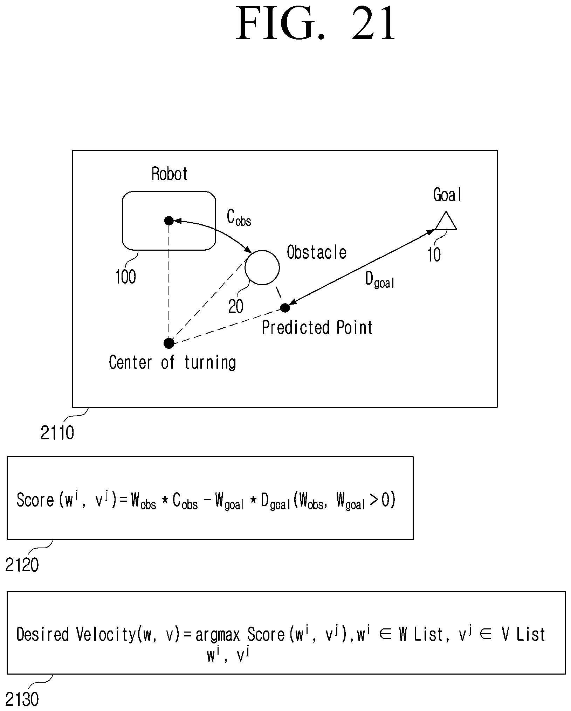

A specific calculation method of the driving score is described in Equation 2120 shown in FIG. 21.

Meanwhile, at least one processor 130 may identify a first motion having the maximum driving score from at least one candidate motion identified as the first classification (or the indecisive classification), identify a second motion having the maximum driving score from at least one candidate motion identified as the second classification (the decisive classification), and identify either the first motion or the second motion as the final motion.

At least one processor 130 may identify a motion having the maximum driving score for each classification (or each group). At least one processor 130 may identify the motion (e.g., first motion) having the maximum driving score from the candidate motions belonging to the indecisive classification (or the first classification). At least one processor 130 may identify the motion (e.g., second motion) having the maximum driving score from the candidate motions belonging to the decisive classification (or the second classification).

Here, the driving score of the first motion may be a first driving score, and the driving score of the second motion may be a second driving score.

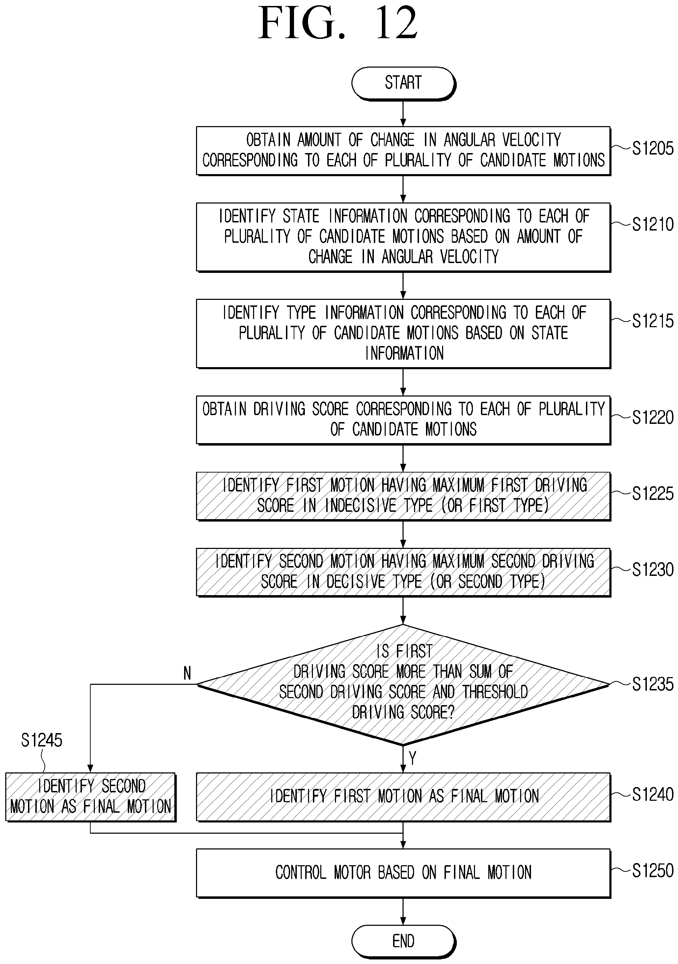

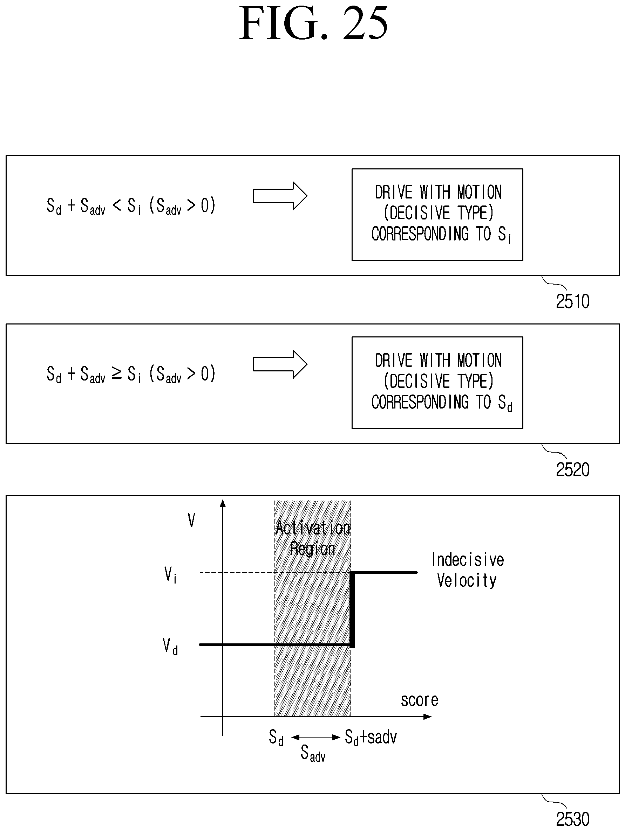

Meanwhile, at least one processor 130 may identify the first motion as the final motion in case that the first driving score of the first motion is more than the sum of the second driving score of the second motion and a threshold driving score, and identify the second motion as the final motion in case that the first driving score of the first motion is the sum of the second driving score of the second motion and the threshold driving score or less. A detailed description thereof is described with reference to FIGS. 12 and 25.

Meanwhile, at least one processor 130 may control the movable robot 100 by classifying its mode into a normal driving mode and a soft driving mode. The normal driving mode may be a mode in which the movable robot 100 drives based on the minimum time, the minimum movement distance, simple obstacle avoidance, and the like. Meanwhile, the soft driving mode may be a mode in which the movable robot 100 drives by additionally considering the amount of change in the angular velocity in addition to the items considered in the normal driving mode. Considering the amount of change in the angular velocity may be considering the existing driving direction (or an existing rotation direction).

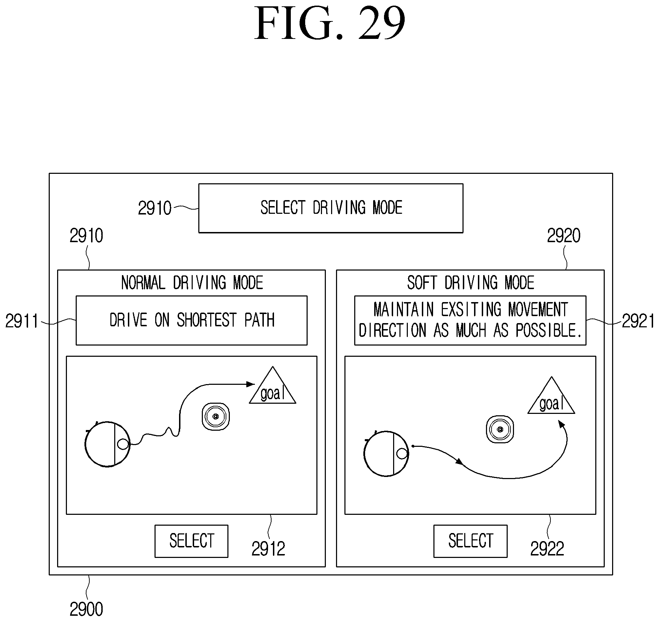

Meanwhile, the movable robot 100 may determine its driving mode based on a user setting. At least one processor 130 may display a guide screen on a display 140 to receive a user input. A detailed description of the guide screen is described with reference to FIG. 29.

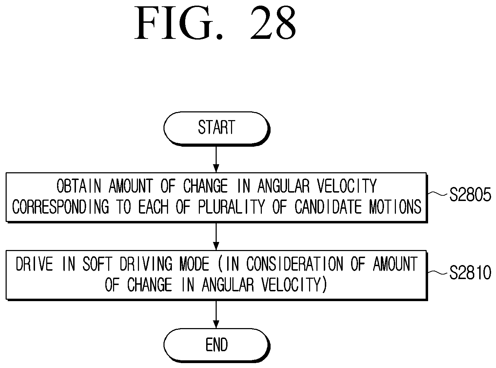

In various examples, the movable robot 100 may always drive in the soft driving mode. A description thereof is described with reference to FIG. 28.

In various examples, the movable robot 100 may drive in the normal driving mode, and may drive in the soft driving mode only in case of identifying a predetermined event.

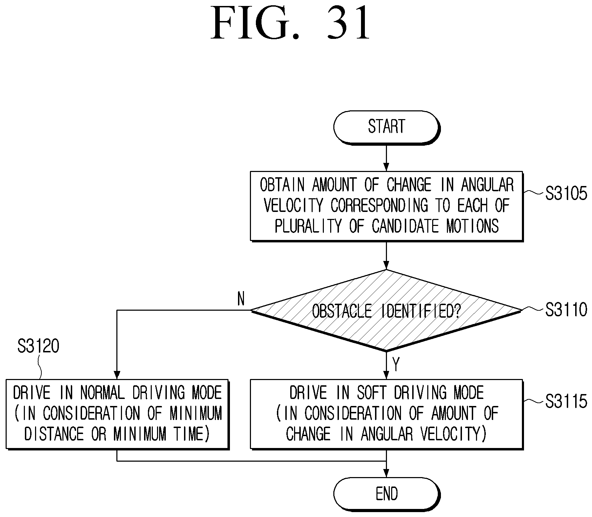

Here, the predetermined event may be an event in which the robot identifies the obstacle. A description related to an obstacle-identification operation is described with reference to FIG. 31.

Meanwhile, the predetermined event may be an event in which a sign (or a positive or negative number) of the amount of change in the angular velocity is changed.

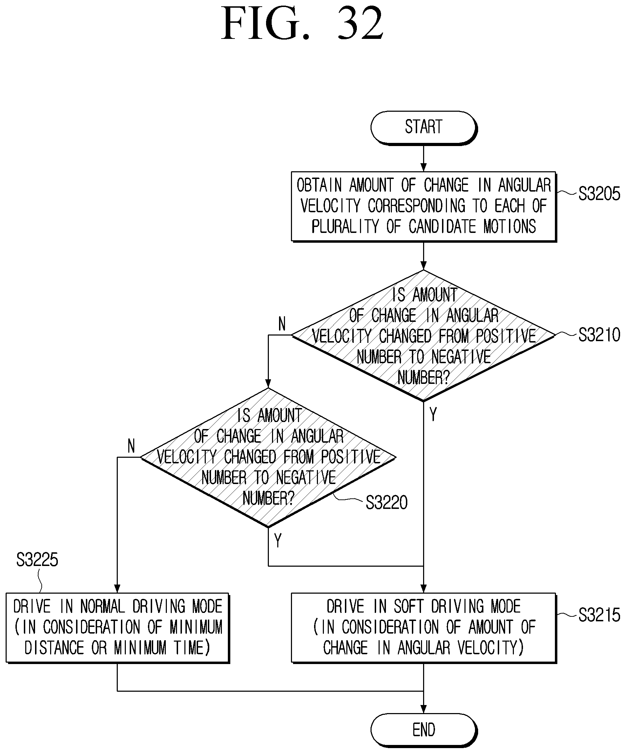

Meanwhile, at least one processor 130 may control the motor 120 to move the movable robot 100 based on the soft driving mode for identifying the final motion from the plurality of candidate motions based on the amount of change in the angular velocity in case that the amount of change in the angular velocity is changed from the positive number to the negative number or the amount of change in the angular velocity is changed from the negative number to the positive number. A detailed description thereof is described with reference to FIG. 32. Meanwhile, the above-described operation may be described as an operation of controlling the movable robot to move based on the soft driving mode for identifying the final motion from the plurality of candidate motions based on the state information on the amount of change in the angular velocity in case that the state information on the amount of change in the angular velocity is changed from the first state (i.e., positive number) to the second state (i.e., negative number) or the state information on the amount of change is changed from the second state (i.e., negative number) to the first state (i.e., positive number).

Meanwhile, the predetermined event may be an event in which the state information on the amount of change in the angular velocity is changed. The description describes that in the classification information, the candidate motion is classified as the indecisive classification (or the first classification) only in case that the first (or positive number) state and the second (or negative number) state are changed with each other. In various examples, the same conditions as a condition for determining the classification information may be applied to the predetermined event. In various examples, the predetermined event may be an event in which the state information is changed to a different state, unlike the condition for determining the classification information.

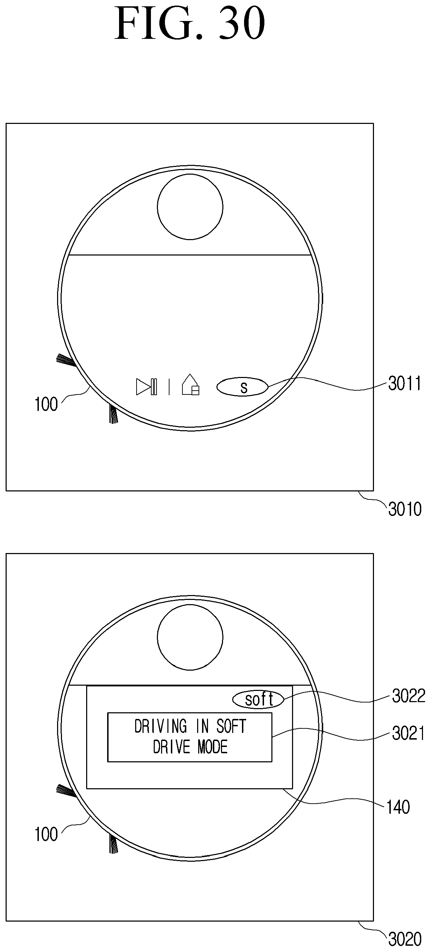

Meanwhile, at least one processor 130 may control the display 140 to display an indicator indicating the soft driving mode for identifying the final motion from the plurality of candidate motions based on the amount of change in the angular velocity. A detailed description thereof is described with reference to FIG. 30.

Meanwhile, in various examples, the state information may be described as two states (e.g., stable state and unstable state). In addition, the classification information may be identified as the indecisive classification (or first classification) only in case that the state information is changed.

Meanwhile, although the above description shows and describes only a simple configuration configuring the movable robot 100, various configurations may be further provided in case of its implementation. A description thereof is provided with reference to FIG. 3.

FIG. 3 is a block diagram for explaining a detailed configuration of the movable robot 100 of FIG. 2.

Referring to FIG. 3, the movable robot 100 may include the sensor 110, the motor 120, at least one processor 130, the display 140, an operation interface 150, the memory 160, and at least one of a speaker 170 or a microphone 180.

Meanwhile, the description omits redundant descriptions of the same operations as described above among the operations of the sensor 110, the motor 120, and at least one processor 130.

The sensor 110 may include at least one of a three-dimensional (3D) image sensor 111, a gyro sensor 112, an optical sensor 113, a bumper sensor 114, an acceleration sensor 115, a wall following sensor 116, a LIDAR sensor 117, or an object identification sensor 118.

The 3D image sensor 111 may be a sensor capturing an image. The 3D image sensor 111 may obtain data required to obtain 3D space information. The 3D image sensor 111 may obtain the image as input data and provide the 3D space information as output data based on the input image. The 3D image sensor 111 may be a sensor additionally obtaining distance information in a two-dimensional (2D) image.

The gyro sensor 112 may be a sensor measuring the angular velocity. The gyro sensor 112 may measure a direction change based on the position information and direction information of a rotating object. In addition, the sensing data obtained from the gyro sensor 112 may be used to obtain information on an inclination angle.

The optical sensor 113 may be a sensor detecting light, and the movable robot 100 may obtain brightness information based on the sensing data obtained from the optical sensor 113. For example, the optical sensor 113 may be at least one of an illuminance sensor, an infrared sensor, an ultraviolet sensor, or a visible ray sensor. Here, the infrared sensor may include a light emitting part and a light receiving part, and obtain the sensing data by using a camera which may emit an infrared ray forward and receive the reflected infrared ray.

The bumper sensor 114 may be a contact sensor attached to a body of the movable robot 100. The bumper sensor 114 may obtain the sensing data on physical contact of the movable robot 100 in order to detect the obstacle or a wall. In addition, the bumper sensor 114 may be disposed on an outer portion of the body, and perform a function of mitigating an impact in case that the movable robot 100 collides with the obstacle during its driving. In addition, the bumper sensor 114 may serve as an auxiliary sensor as an obstacle sensor. For example, the bumper sensor 114 may identify that obstacle that is not identified by the 3D image sensor 111. The bumper sensor 114 may use a method in which a switch is clicked by a physical force in case that the object comes into contact with the bumper sensor 114.

The acceleration sensor 115 may be a sensor detecting the motion state of the movable robot 100 and obtaining data on a change in its velocity. The acceleration sensor 115 may obtain a motion vector by detecting the movement distance and movement direction of the movable robot 100.

The wall following sensor 116 may be a sensor detecting data on the wall and obtains the sensing data for the movable robot 100 to drive along the wall. The movable robot 100 may perform a cleaning operation while moving along a wall surface based on the data obtained from the wall following sensor 116.

The LIDAR sensor 117 may be a sensor obtaining distance information or position information of the movable robot 100 that is based on the object by irradiating a laser to the object. Light detection and ranging (LIDAR) may be technology using laser light, and may be technology using changes in time and wavelength from a time point at which the laser light is emitted to a time point at which the laser light is received by reflecting on the object. The sensing data obtained from the lidar sensor 117 may be used to obtain the velocity or direction of the object, or a shape of its surrounding space.

The object identification sensor 118 may be a sensor identifying the object on the driving path of the movable robot 100. Meanwhile, the object identification sensor 118 may obtain the sensing data from at least one of the 3D image sensor 111, the bumper sensor 114 or the lidar sensor 117 to identify the object. The object identification sensor 118 may be described as an object identification module in using the sensing data of other sensors.

In addition, the sensor 110 may include a line laser sensor (not shown). The line laser sensor (not shown) may use a principle in which a line laser is vertically emitted and physically changed in case that the 2D laser is focused on the obstacle by using a scanned image.

The display 140 may be implemented as various classifications of displays such as a liquid crystal display (LCD), an organic light emitting diode (OLED) display, a plasma display panel (PDP), and the like. The display 140 may include a driving circuit, a backlight unit, and the like, which may be implemented in a form such as an amorphous silicon thin film transistor (a-si TFT), a low temperature poly silicon (LTPS) TFT, a thin film transistor (TFT), an organic TFT (OTFT), or the like. Meanwhile, the display 140 may be implemented as a touch screen combined with a touch sensor, a flexible display, a three-dimensional (3D) display, or the like. In addition, the display 140 may include not only a display panel outputting the image, but also a bezel housing the display panel according to an embodiment of the disclosure. In particular, the bezel may include the touch sensor (not shown) detecting user interaction according to an embodiment of the disclosure.

The operation interface 150 may be implemented as a device such as a button, a touch pad, a mouse or a keyboard, or may be implemented as a touch screen which may also perform an operation input function in addition to the above-described display function. Here, the button may be any of various classifications of buttons such as a mechanical button, a touch pad, a wheel or the like, which is positioned in any region, such as the front, side, or rear surface of a body appearance of the movable robot 100.

The memory 160 may be implemented as an internal memory such as a read-only memory (ROM) (e.g., electrically erasable programmable read-only memory (EEPROM)) or a random access memory (RAM), included in at least one processor 130, or may be implemented as a memory separate from at least one processor 130. In this case, the memory 160 may be implemented in a form of a memory embedded in the movable robot 100 or a form of a memory detachable from the movable robot 100 based on a data storing purpose. For example, data for driving the movable robot 100 may be stored in the memory embedded in the movable robot 100, and data for an extension function of the movable robot 100 may be stored in the memory detachable from the movable robot 100.

Meanwhile, the memory embedded in the movable robot 100 may be implemented as at least one of a volatile memory (e.g., dynamic RAM (DRAM), static RAM (SRAM) or synchronous dynamic RAM (SDRAM)), a non-volatile memory (e.g., one time programmable ROM(OTPROM), programmable ROM (PROM), erasable and programmable ROM (EPROM), electrically erasable and programmable ROM (EEPROM)), a mask ROM, a flash ROM, a flash memory (e.g., NAND flash, NOR flash or the like), a hard drive or a solid state drive (SSD); and the memory detachable from the movable robot 100 may be implemented as a memory card (e.g., compact flash (CF), secure digital (SD), micro secure digital (Micro-SD), mini secure digital (mini-SD), extreme digital (xD), multi-media card (MMC) or the like), an external memory (e.g., USB memory) which may be connected to a universal serial bus (USB) port, or the like.

The speaker 170 may be configured to output not only various audio data but also various notification sounds or voice messages.

The microphone 180 may be configured to receive a user voice or other sounds and convert the user voice or other sounds into the audio data. The microphone 180 may receive the user voice in case of being activated. For example, the microphone 180 may be formed integrally with the movable robot 100 in its upper, front, or side direction. The microphone 180 may include various components such as a microphone collecting the user voice in an analog form, an amplifier circuit amplifying the collected user voice, an analog to digital (A/D) conversion circuit sampling the amplified user voice and converting the same into a digital signal, and a filter circuit removing a noise component from the converted digital signal.

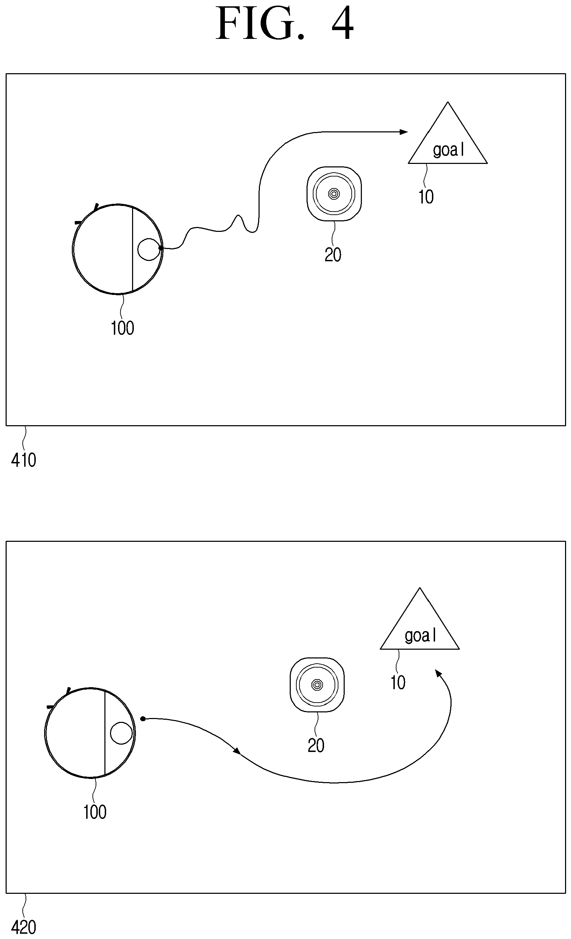

FIG. 4 is a view for explaining an operation of calculating the driving path of the movable robot 100.

In example 410, the movable robot 100 may drive based on the minimum distance or the minimum time. The movable robot 100 may rapidly change the driving path to minimize the movement distance or a movement time on the driving path. Its operation mode in example 410 may be described as the normal driving mode.

In example 420, the movable robot 100 may drive while maintaining an existing driving path as much as possible. Unless it is an unavoidable situation, the movable robot 100 may set the driving path to maintain the existing driving direction as much as possible even in case that it is not the minimum distance (or the minimum time). The movable robot 100 may not rapidly change the driving path in case that the driving path is provided by a method of maintaining the existing direction as much as possible. Its operation mode in example 420 may be described as the soft driving mode.

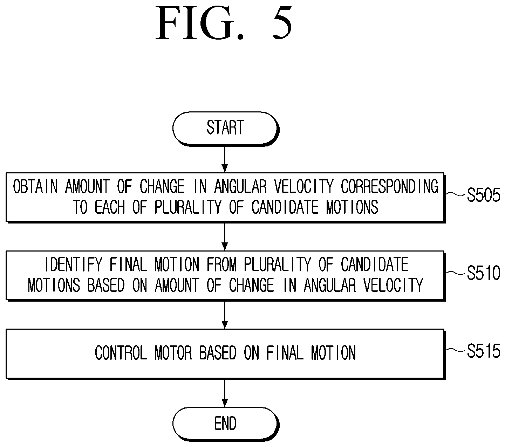

FIG. 5 is a flowchart showing an operation considering the amount of change in the angular velocity in determining the motion of the movable robot 100.

Referring to FIG. 5, the movable robot 100 may obtain the amount of change in the angular velocity corresponding to each of the plurality of candidate motions (S505). The movable robot 100 may determine one optimal motion among the various candidate motions for moving from a point where the movable robot 100 is currently positioned to a next movement point.

The movable robot 100 may then identify one final motion from the plurality of candidate motions based on the amount of change in the angular velocity (S510). The movable robot 100 may obtain the angular velocity in every case of performing one motion and calculate a change in the obtained angular velocity. The movable robot 100 may identify (or provide) its driving path by analyzing the calculated amount of change in the angular velocity.

The movable robot 100 may then control the motor based on the final motion (S515). In case of determining the final motion, the movable robot 100 may control the motor (or the driving device) so that the movable robot 100 is controlled based on the final motion.

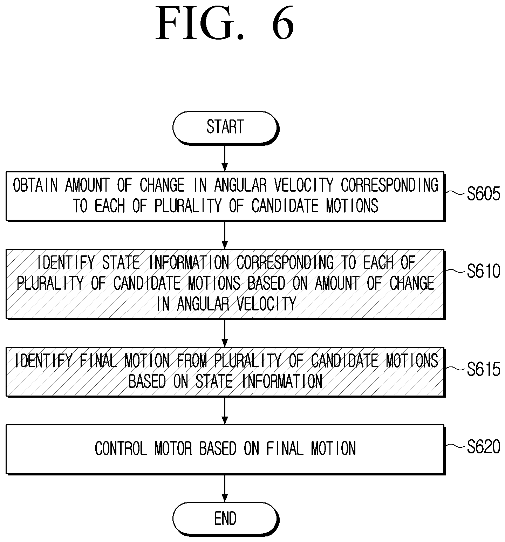

FIG. 6 is a flowchart showing an operation of considering the state information in determining the motion of the movable robot 100.

Steps S605 and S620 of FIG. 6 may correspond to steps S505 and S515 of FIG. 5. Therefore, the description omits redundant descriptions thereof.

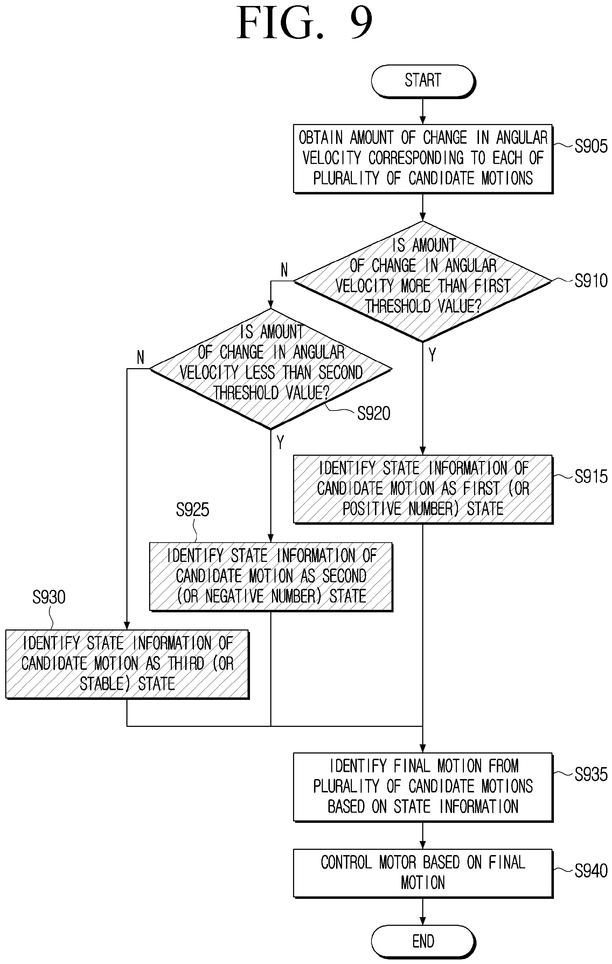

After obtaining the amount of change in the angular velocity, the movable robot 100 may identify the state information corresponding to each of the plurality of candidate motions based on the amount of change in the angular velocity (S610). The state information may be determined based on the amount of change in the angular velocity, which is the difference between the angular velocity obtained at the previous time point and the angular velocity of the candidate motion, which is to be finally determined at the current time point. A detailed operation of determining the state information is described with reference to FIGS. 9 and 13.

The movable robot 100 may then identify the final motion from the plurality of candidate motions based on the state information (S615). The movable robot 100 may identify the final motion by considering the change in the state information.

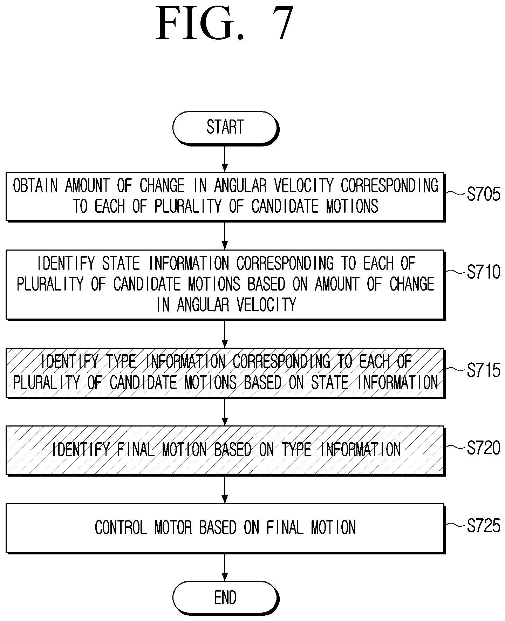

FIG. 7 is a flowchart showing an operation of considering the classification information in determining the motion of the movable robot 100.

Steps S705, S710, and S725 of FIG. 7 may correspond to steps S605, S610, and S620 of FIG. 6. Therefore, the description omits redundant descriptions thereof.

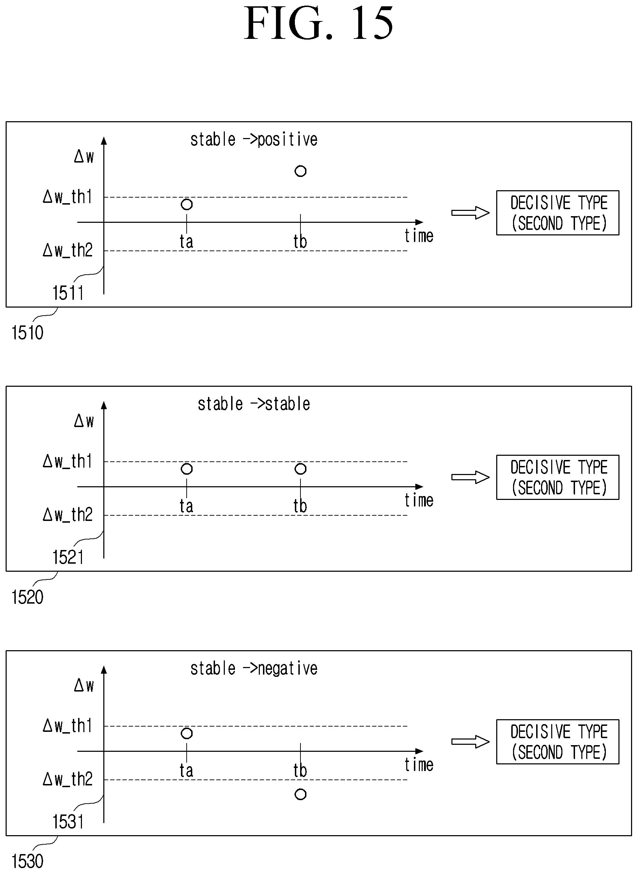

After identifying the state information based on the amount of change in the angular velocity, the movable robot 100 may identify the classification information corresponding to each of the plurality of candidate motions based on the state information (S715). The classification information may be determined by comparing the amount of change in the angular velocity obtained at the previous time point with the amount of change in the angular velocity of the candidate motion to be finally determined at the current time point. A detailed operation of determining the classification information is described with reference to FIGS. 15 to 20.

The movable robot 100 may then identify the final motion based on the classification information (S720). The movable robot 100 may determine one motion among the plurality of classified candidate motions as the final motion based on the classification information.

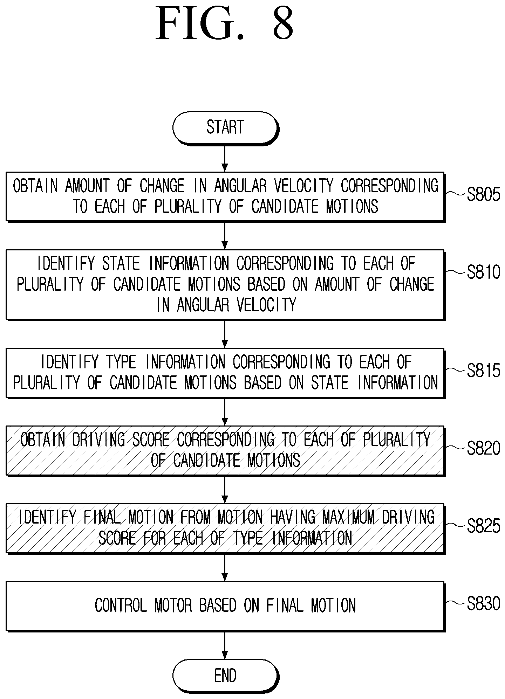

FIG. 8 is a flowchart for explaining an operation of considering the driving score in determining the motion of the movable robot 100.

Steps S805, S810, S815, and S830 of FIG. 8 may correspond to steps S705, S710, S715, and S725. Therefore, the description omits redundant descriptions thereof.

After identifying the classification information, the movable robot 100 may obtain the driving score corresponding to each of the plurality of candidate motions (S820). The driving score may be a score indicating how good the movable robot 100 is in terms of its movement distance, movement time, and stability in moving to the goal. Its motion may be a motion more suitable for the driving of the movable robot 100 as the motion has a greater driving score.

The movable robot 100 may then identify the final motion from the motion having the maximum driving score for each of the classification information (S825). The movable robot 100 may classify the plurality of candidate motions into the predetermined classifications.

For example, three candidate motions among ten candidate motions may be determined as the first classification, and the rest seven candidate motions may be determined as the second classification. The movable robot 100 may determine, as the first motion, the motion having the maximum driving score among the candidate motions belonging to the first classification. The movable robot 100 may also determine, as the second motion, the motion having the maximum driving score among the candidate motions belonging to the second classification. The movable robot 100 may identify the final motion from the first motion or the second motion that has the maximum driving score for each of the classification information.

FIG. 9 is a flowchart for explaining a process of calculating the state information.

Steps S905, S935, and S940 of FIG. 9 may correspond to steps S605, S615, and S620 of FIG. 6. Therefore, the description omits redundant descriptions thereof.

The movable robot 100 may obtain the amount of change in the angular velocity corresponding to each of the plurality of candidate motions (S905).

The movable robot 100 may then determine whether the amount of change in the angular velocity is more than the first threshold value (S910). In case that the amount of change in the angular velocity is more than the first threshold value (S910-Y), the movable robot 100 may identify the state information of the candidate motion as the first (or positive number) state (S915).

In case that the amount of change in the angular velocity is not more than the first threshold value (S910-N), the movable robot 100 may determine whether the amount of change in the angular velocity is less than the second threshold value (S920). In case that the amount of change in the angular velocity is less than the second threshold value (S920-Y), the movable robot 100 may identify the state information of the candidate motion as the second (or negative number) state (S925).

In case that the amount of change in the angular velocity is not less than the second threshold value (S920-N), the movable robot 100 may identify the state information of the candidate motion as the third (or stable) state (S930).

The movable robot 100 may identify the state information corresponding to each of the candidate motions and store the identified information.

The movable robot 100 may identify the final motion based on the state information of the candidate motion (S935). The movable robot 100 may then control the motor based on the final motion (S940).

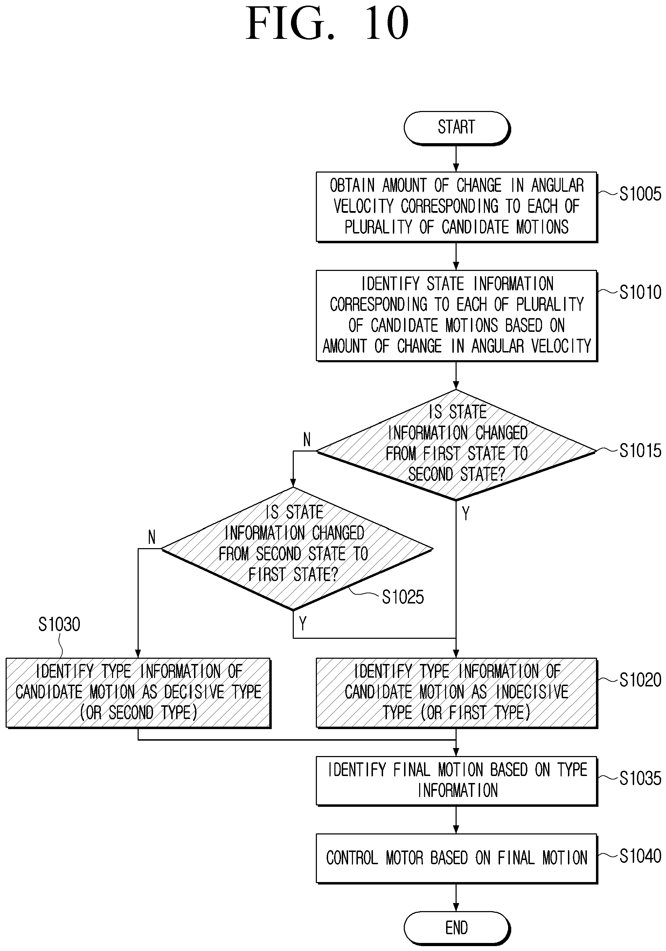

FIG. 10 is a flowchart showing a process of calculating the classification information in various examples.

Steps S1005, S1010, S1035, and S1040 of FIG. 10 may correspond to steps S705, S710, S720, and S725 of FIG. 7. In addition, an operation of classifying each of the plurality of candidate motions into the first state, the second state, and the third state may be the same as steps S910 to S930 of FIG. 9. Therefore, the description omits redundant descriptions thereof.

After identifying the state information, the movable robot 100 may identify whether the state information is changed from the first state to the second state (S1015). The movable robot 100 may identify whether the state information at the previous time point (or the state information corresponding to the final motion at the previous time point) is the first state, and the state information at the current time point (or the state information corresponding to the candidate motion) is the second state. In case that the state information is changed from the first state to the second state (S1015-Y), the movable robot 100 may identify the classification information of the candidate motion as the indecisive classification (or first classification) (S1020).

In case that the state information is not changed from the first state to the second state (S1015-N), the movable robot 100 may identify whether the state information is changed from the second state to the first state (S1025). In case that the state information is changed from the second state to the first state (S1025-Y), the movable robot 100 may identify that the classification information of the candidate motion is the indecisive classification (or the first classification) (S1020).

In case that the state information is not changed from the second state to the first state (S 1025-N), the movable robot 100 may identify the classification information of the candidate motion as the decisive classification (or the second classification) (S1030). The movable robot 100 may store the classification information of each of the plurality of candidate motions.

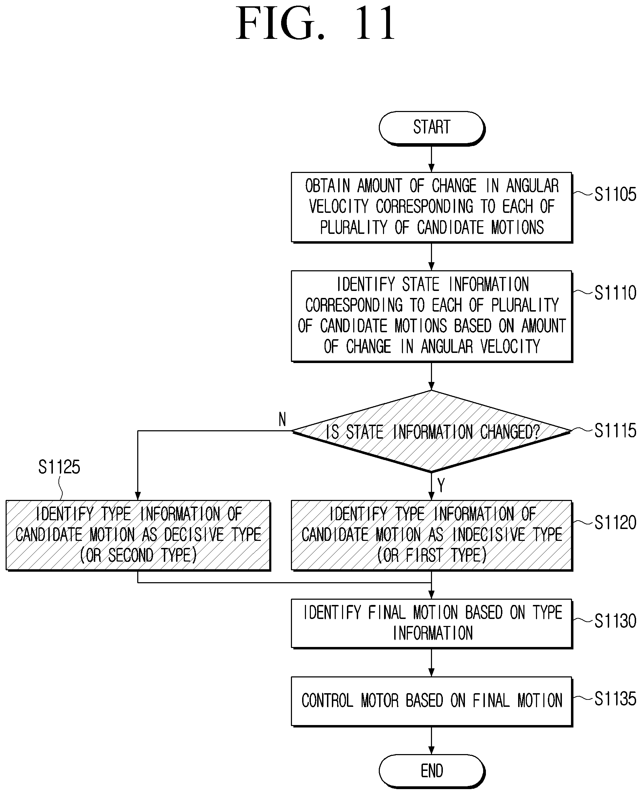

FIG. 11 is a flowchart showing a process of calculating the classification information in various examples.

Steps S1105, S1110, S1130, and S1135 of FIG. 11 may correspond to steps S1005, S1010, S1035, and S1140 of FIG. 10. Therefore, the description omits redundant descriptions thereof.

In FIG. 10, the classification information may be identified as the indecisive classification (or the first classification) only in case that the state information is changed from the first state to the second state or from the second state to the first state. However, in various examples, the movable robot 100 may identify the classification information as the indecisive classification (or the first classification) in case that the state information is changed to another state. For example, in case that the first state is changed to the second or third state, the movable robot 100 may identify the classification information of the candidate motion as the indecisive classification (or the first classification). In addition, in case that the second state is changed to the first or third state, the movable robot 100 may identify the classification information of the candidate motion as the indecisive classification (or the first classification). In addition, in case that the third state is changed to the first or second state, the movable robot 100 may identify the classification information of the candidate motion as the indecisive classification (or the first classification).

After identifying the state information, the movable robot 100 may identify whether the state information is changed (S1115). In case that the state information is changed (S1115-Y), the movable robot 100 may identify the classification information of the candidate motion as the indecisive classification (or the first classification) (S1120).

In case that the state information is not changed (S1115-N), the movable robot 100 may identify the classification information of the candidate motion as the decisive classification (or the second classification) (S1125). The movable robot 100 may store the classification information of each of the plurality of candidate motions.

FIG. 12 is a flowchart for explaining a process of identifying the final motion based on the classification information and the driving score.

Steps S1205, S1210, S1215, S1220, and S1250 of FIG. 12 may correspond to steps S805, S810, S815, S820, and S830 of FIG. 8. In addition, the operation of classifying each of the plurality of candidate motions into the first state, the second state, and the third state may be the same as steps S910 to S930 of FIG. 9. In addition, an operation of classifying each of the plurality of candidate motions to the indecisive classification (or the first classification) or the decisive classification (or the second classification) may be the same as steps S1015 to S1030 of FIG. 10. Therefore, the description omits redundant descriptions thereof.

After obtaining the driving score, the movable robot 100 may identify the first motion having the maximum first driving score in the indecisive classification (or the first classification) (S1225).

The movable robot 100 may then identify the second motion having the maximum second driving score in the decisive classification (or the second classification) (S1230).

The movable robot 100 may then add up the second driving score and the threshold driving score. The movable robot 100 may then determine whether the first driving score is more than the sum (or sum value) of the second driving score and the threshold driving score (S1235). In case that the first driving score is more than the sum (or sum value) of the second driving score and the threshold driving score (S1235-Y), the movable robot 100 may identify the first motion as the final motion (S1240).

In case that the first driving score is not more than the sum (or sum value) of the second driving score and the threshold driving score (S1235-N), the movable robot 100 may identify the second motion as the final motion (S1245).

FIG. 13 is the table for generally explaining the calculation process for identifying the final motion from the plurality of candidate motions based on the amount of change in the angular velocity.

Referring to table 1305 of FIG. 13, the movable robot 100 may obtain the driving scores of the plurality of candidate motions #01 to #10. Here, table 1305 may be a driving score table.

Here, wi (w1 to w12) may indicate the angular velocities of the plurality of candidate motions which may be identified (or selected) at the time point N (or the current time point). Meanwhile, the movable robot 100 may store the angular velocity of the final motion identified at the previous time point N-1. In table 1305, the angular velocity at the previous time point is -0.15.

In addition, the movable robot 100 may obtain the amount of change in the angular velocity based on a difference value between the angular velocity (-0.15) at the previous time point and the angular velocity of the candidate motion.

For example, the movable robot 100 may obtain the amount of change in the angular velocity (+0.25) based on a difference value between the angular velocity (0.1) of the candidate motion #01 and the angular velocity (-0.15) at the previous time point.

In addition, the movable robot 100 may identify the state information of candidate motion based on the amount of change in the angular velocity, the first threshold value, and the second threshold value. It is assumed that the first threshold value is 0.1 and the second threshold value is -0.1. Here, the first threshold value and the second threshold value may be changed based on the user setting. In addition, the absolute values of the first and second threshold values may be the same as each other.

In case that the amount of change in the angular velocity is more than the first threshold value (0.1), the movable robot 100 may identify the state information of the candidate motion as the first (or positive number) state. In case that the amount of change in the angular velocity is the first threshold value (0.1) or less and the second threshold value (-0.1) or more, the movable robot 100 may identify the state information of the candidate motion as the third (or stable) state. In case that the amount of change in the angular velocity is less than the second threshold value (-0.1), the movable robot 100 may identify the state information of the candidate motion as the second (or negative number) state.

For example, the amount of change in the angular velocity (+0.25) of the candidate motion #01 may be more than the first threshold value (0.1), and the movable robot 100 may thus identify the state information of the candidate motion #01 as the first (or positive number) state.

In addition, the amount of change in the angular velocity (+0.1) of the candidate motion #04 is the first threshold value (0.1) or less and the second threshold value (-0.1) or more, and the movable robot 100 may identify the state information of the candidate motion #04 as the third (or stable) state.

In addition, the amount of change in the angular velocity (-0.15) of the candidate motion #09 may be less than the second threshold value (-0.1), and the movable robot 100 may thus identify the state information of the candidate motion #09 as the first (or positive number) state.

Meanwhile, the movable robot 100 may store the state information identified at the previous time point. Here, the stored state information may be determined by synthesizing the state information collected in the predetermined period. Therefore, the state information may be described as the predetermined state information. For example, it is assumed that the state information or the predetermined state information at the previous time point is the second (or negative number) state.

In addition, the movable robot 100 may identify the classification information based on the predetermined state information (at the previous time point) and the state information (at the current time point) of the candidate motion. In case that the state information is changed from the first (or positive number) state to the second (or negative number) state or from the second (or negative number) state to the first (or positive number) state, the movable robot 100 may determined the classification information of the candidate motion as the indecisive classification (or the first classification). In case that the state information is changed from the third (or stable) state to another state or from another state to the third (or stable) state, the movable robot 100 may determine the classification information of the candidate motion as the decisive classification (or the second classification).

For example, the state information of the candidate motion #01 may be changed from the second (or negative number) state to the first (or positive number) state, and the movable robot 100 may thus identify the classification information of the candidate motion #01 as the indecisive classification (or the first classification).

In addition, the state information of the candidate motion #04 may be changed from the second (or negative number) state to the third (or stable) state, and the movable robot 100 may thus identify the classification information of the candidate motion #04 as the decisive classification (or the second classification).

In addition, the state information of the candidate motion #09 may be maintained from the second (or negative number) state to the second (or negative number) state, and the movable robot 100 may thus identify the classification information of the candidate motion #09 as the decisive classification (or the second classification).

In addition, the movable robot 100 may calculate the driving score corresponding to each of the plurality of candidate motions. A detailed description of the driving score is described with reference to FIGS. 21 to 24.

In addition, the movable robot 100 may identify the motion having the maximum score for each of the classification information.

For example, the movable robot 100 may identify the candidate motion #02 having the maximum score (9) from the candidate motions w1, w2, and w3, classified as the indecisive classification (or the first classification). In addition, the movable robot 100 may identify the candidate motion #07 having the maximum score (6) from the candidate motions w4, w5, and w6, w7, w8, w9, and w10, classified as the decisive classification (or the second classification).

In addition, the movable robot 100 may identify, as the final motion, one motion from the candidate motions w2 and w7, having the maximum score for each of the classification information.

In detail, the movable robot 100 may identify the final motion based on the maximum score and threshold score, identified for each of the classification of information. The movable robot 100 may obtain a value obtained by adding up the maximum score obtained in the decisive classification (or the second classification) and the threshold score. In addition, the movable robot 100 may identify whether the maximum score obtained in the indecisive classification (or the first classification) is more than the sum value of the maximum score obtained in the decisive classification (or the second classification) and the threshold score.

In case that the maximum score obtained in the indecisive classification (or the first classification) is more than the sum value of the maximum score obtained in the decisive classification (or the second classification) and the threshold score, the movable robot 100 may identify, as the final motion, the candidate motion corresponding to the maximum score obtained in the indecisive classification (or the first classification).

In case that the maximum score obtained in the indecisive classification (or the first classification) is not more than the sum value of the maximum score obtained in the decisive classification (or the second classification) and the threshold score, the movable robot 100 may identify, as the final motion, the candidate motion corresponding to the maximum score obtained in the decisive classification (or the second classification).

It is assumed that the threshold score is 2. For example, the maximum score (9) obtained in the indecisive classification (or the first classification) is more than the sum value (8) of the maximum score (6) obtained in the decisive classification (or the second classification) and the threshold score (2), and the movable robot 100 may thus identify, as the final motion, the candidate motion #02 corresponding to the maximum score obtained in the indecisive classification (or the first classification).

FIG. 14 is a view for explaining the amount of change in the angular velocity.

Referring to the graph 1410 of FIG. 14, the movable robot 100 may set the driving path based on the dynamic window approach method. The dynamic window approach method may be a method of avoiding the obstacle in driving the robot, and be a method of finding an optimal solution by setting a valid search space as a window. The movable robot 100 may determine a motion having determined angular velocity w^i and linear velocity v^j by using the dynamic window approach method. Here, the linear velocity may be obtained based on the sensing data of the sensor 110 included in the movable robot 100.

Meanwhile, the plurality of candidate motions may be determined in a valid search space 1411 at a time point N-2. The movable robot 100 may identify, as the final motion, the motion including the specific angular velocity w^i and the specific linear velocity v^j in the valid search space 1411.

Meanwhile, the plurality of candidate motions may be determined in a valid search space 1412 at the time point N-1. The movable robot 100 may identify, as the final motion, the motion including the specific angular velocity w^i and the specific linear velocity v^j in the valid search space 1412.

In addition, the plurality of candidate motions may be determined in a valid search space 1413 at the time point N. The movable robot 100 may identify, as the final motion, the motion including the specific angular velocity w^i and the specific linear velocity v^j in the valid search space 1413.

Graph 1420 of FIG. 14 shows the angular velocity over time. That is, graph 1420 may show the angular velocity at each of the plurality of time points N-2, N-1, and N. The final motion may be selected at each of the plurality of time points. The movable robot 100 may store the angular velocity corresponding to the final motion that is selected (or identified) at each of the plurality of time points. In addition, the movable robot 100 may calculate the amount of change in the angular velocity, and store the calculated amount of change in the angular velocity. Here, "w^i" may indicate the angular velocity, and the unit of angular velocity may be rad/s.

Graph 1430 of FIG. 14 shows the amount of change in the angular velocity over time. Graph 1430 shows the amount of change in the angular velocity at each of the plurality of time points N-2, N-1, and N.

It is assumed that the amount of change in the angular velocity is zero at the time point N-2. The amount of change in the angular velocity (zero) of the movable robot 100 may be the first threshold value or less and the second threshold value or more, and the movable robot 100 may identify the state information at the time point N-2 as the third (or stable) state.

The amount of change in the angular velocity at the time point N-1 is more than the first threshold value, and the movable robot 100 may thus identify the state information at the time point N-1 as the first (or positive number) state.

The amount of change in the angular velocity at the time point N may be less than the second threshold value, and the movable robot 100 may thus identify the state information at the time point N as the second (or negative number) state.

Here, the absolute values of the first and second threshold values may be the same as each other, and signs of the first and second threshold values may be different from each other.

FIG. 15 is a view for explaining an operation of identifying the classification information in various examples.

Table 1511 of example 1510 in FIG. 15 shows that the state information is changed from the third (or stable) state to the first (or positive number) state. The state information at a previous time point ta may be the third (or stable) state, and the state information of the candidate motion at a current time point tb may be the first (or positive number) state. Accordingly, the movable robot 100 may determine the classification information of example 1510 as the decisive classification (or the second classification).

Table 1521 of example 1520 in FIG. 15 shows that the state information is maintained from the third (or stable) state to the third (or stable) state. The state information at the previous time point ta may be the third (or stable) state, and the state information of the candidate motion at the current time point tb may be the third (or stable) state. Accordingly, the movable robot 100 may determine the classification information of example 1520 as the decisive classification (or the second classification).

Table 1531 of example 1530 in FIG. 15 shows that the state information is changed from the third (or stable) state to the second (or negative number) state. The state information at the previous time point ta may be the third (or stable) state, and the state information of the candidate motion at the current time point tb may be the second (or negative number) state. Accordingly, the movable robot 100 may determine the classification information of example 1530 as the decisive classification (or the second classification).

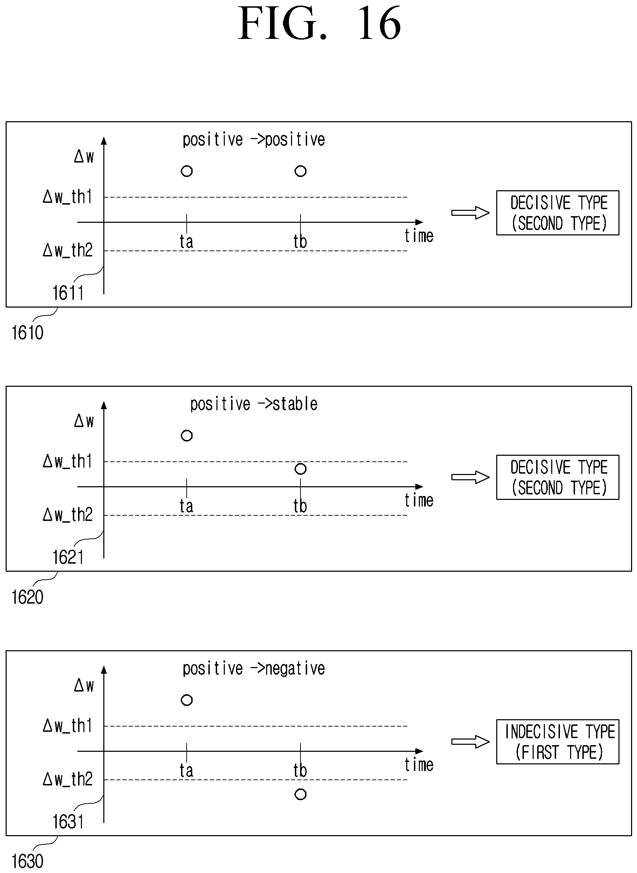

FIG. 16 is a view for explaining an operation of identifying the classification information in various examples.

Table 1611 of example 1610 in FIG. 16 shows that the state information is maintained from the first (or positive number) state to the first (or positive number) state. The state information at the previous time point ta may be the first (or positive number) state, and the state information of the candidate motion at the current time point tb may be the first (or positive number) state. Accordingly, the movable robot 100 may determine the classification information of example 1610 as the decisive classification (or the second classification).

Table 1621 of example 1620 in FIG. 16 shows that the state information is changed from the first (or positive number) state to the third (or stable) state. The state information at the previous time point ta may be the first (or positive number) state, and the state information of the candidate motion at a current time point tb may be the third (or stable) state. Accordingly, the movable robot 100 may determine the classification information of example 1620 as the decisive classification (or the second classification).

Table 1631 of example 1630 in FIG. 16 shows that the state information is changed from the first (or positive number) state to the second (or negative number) state. The state information at the previous time point ta may be the first (or positive number) state, and the state information of the candidate motion at the current time point tb may be the second (or negative number) state. Accordingly, the movable robot 100 may determine the classification information of example 1630 as the indecisive classification (or the first classification).

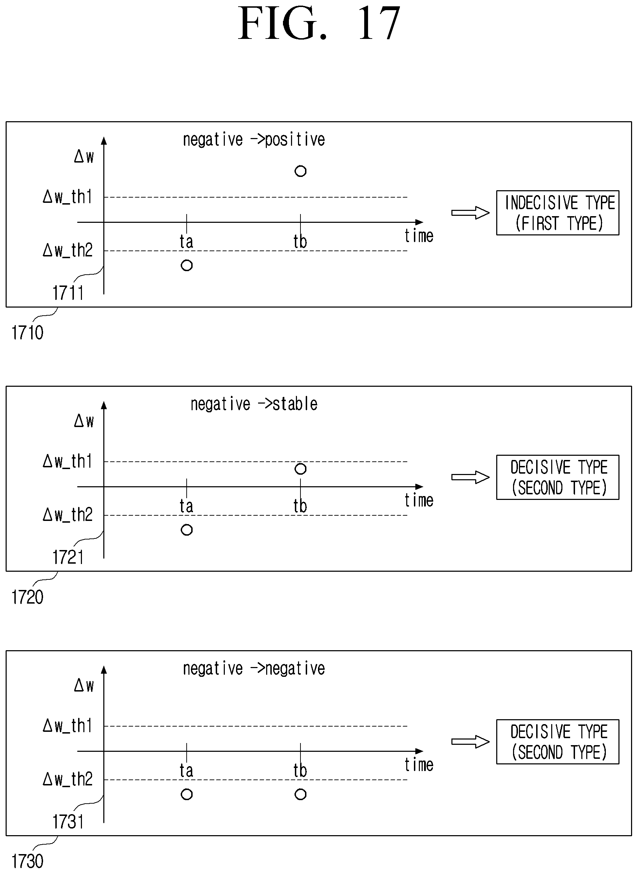

FIG. 17 is a view for explaining an operation of identifying the classification information in various examples.

Table 1711 of example 1710 in FIG. 17 shows that the state information is changed from the second (or negative number) state to the first (or positive number) state. The state information at the previous time point ta may be the second (or negative number) state, and the state information of the candidate motion at the current time point tb may be the first (or positive number) state. Accordingly, the movable robot 100 may determine the classification information of example 1710 as the indecisive classification (or the first classification).

Table 1721 of example 1720 in FIG. 17 shows that the state information is changed from the second (or negative number) state to the third (or stable) state. The state information at the previous time point ta may be the second (or negative number) state, and the state information of the candidate motion at the current time point tb may be the third (or stable) state. Accordingly, the movable robot 100 may determine the classification information of example 1720 as the decisive classification (or the second classification).

Table 1731 of example 1730 in FIG. 17 shows that the state information is maintained from the second (or negative number) state to the second (or negative number) state. The state information at the previous time point ta may be the second (or negative number) state, and the state information of the candidate motion at the current time point tb may be the second (or negative number) state. Accordingly, the movable robot 100 may determine the classification information of example 1730 as the decisive classification (or the second classification).

FIG. 18 is a view for explaining an operation of identifying the classification information in consideration of the amount of change in the angular velocity that is stored for the predetermined period in various examples.

In various examples, in case of identifying any one of the first (or positive number) state or the second (or negative number) state in the predetermined period, the movable robot 100 may identify the predetermined state information as the identified first (or positive number) state or the identified second (or negative number) state. In addition, in case that the predetermined period includes only the third (or stable) state, the movable robot 100 may identify the predetermined state information as the third (or stable) state. In addition, in case of identifying both the first (or positive number) state and the second (or negative number) state in the predetermined period, the movable robot 100 may determine the predetermined state information as the most recently-identified state information.

Graph 1810 of FIG. 18 shows the angular velocity over time. Graph 1810 shows the angular velocity from time point t0 to time point t7. The movable robot 100 may obtain the amount of change in the angular velocity based on the angular velocity of the plurality of candidate motions at time point t7.

Graph 1820 of FIG. 18 shows the amount of change in the angular velocity over time. Graph 1820 shows the amount of change in the angular velocity from time point t1 to time point t7. The movable robot 100 may identify the state information based on the amount of change in the angular velocity of each of the plurality of candidate motions at time point t7.

Table 1830 of FIG. 18 shows the state information overtime. Table 1830 shows the state information from time point t1 to time point t7. The movable robot 100 may identify the state information at the previous time point based on the predetermined period.

For example, it is assumed that the predetermined period is 5 units of time. The movable robot 100 may identify that the predetermined state information is the second (or negative number) state based on the state information corresponding to each of time points t2 to t6. The reason is that the first (or positive number) state is not identified and only the second (or negative number) state is identified from time points t2 to t6. In addition, it is assumed that the state information of the candidate motion is the second (or negative number) state. The predetermined state information may be the second (or negative number) state and the state information of the candidate motion may be the second (or negative number) state, and the movable robot 100 may thus determine the classification information of the candidate motion as the decisive classification (or the second classification).

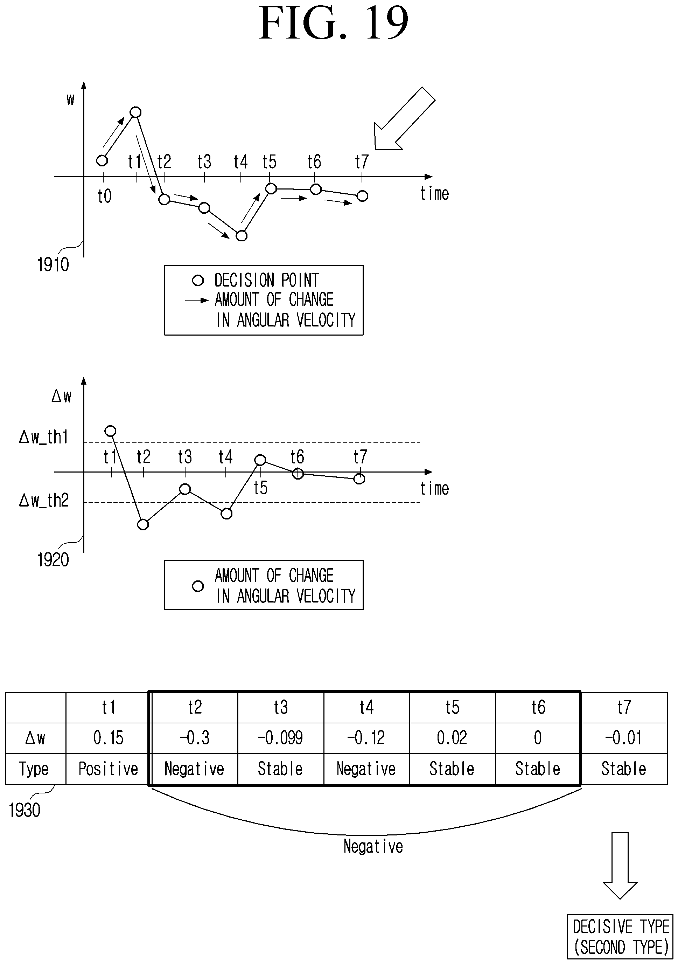

FIG. 19 is a view for explaining an operation of identifying the classification information in consideration of the amount of change in the angular velocity that is stored for the predetermined period in various examples.

Graph 1910 of FIG. 19 shows the angular velocity over time. Graph 1910 shows the angular velocity from time point t0 to time point t7. The movable robot 100 may obtain the amount of change in the angular velocity based on the angular velocity of the plurality of candidate motions at time point t7.

Graph 1920 of FIG. 19 shows the amount of change in the angular velocity over time. Graph 1920 shows the amount of change in the angular velocity from time point t1 to time point t7. The movable robot 100 may identify the state information based on the amount of change in the angular velocity of each of the plurality of candidate motions at time point t7.

Table 1930 of FIG. 19 shows the state information over time. Table 1930 shows the state information from time point t1 to time point t7. The movable robot 100 may identify the state information at the previous time point based on the predetermined period.

For example, it is assumed that the predetermined period is 5 units of time. The movable robot 100 may identify that the predetermined state information is the second (or negative number) state based on the state information corresponding to each of time points t2 to t6. The reason is that the first (or positive number) state is not identified and only the second (or negative number) state is identified from time points t2 to t6. In addition, it is assumed that the state information of the candidate motion is the third (or stable) state. The predetermined state information may be the second (or negative number) state and the state information of the candidate motion may be the third (or stable) state, and the movable robot 100 may thus determine the classification information of the candidate motion as the decisive classification (or the second classification).

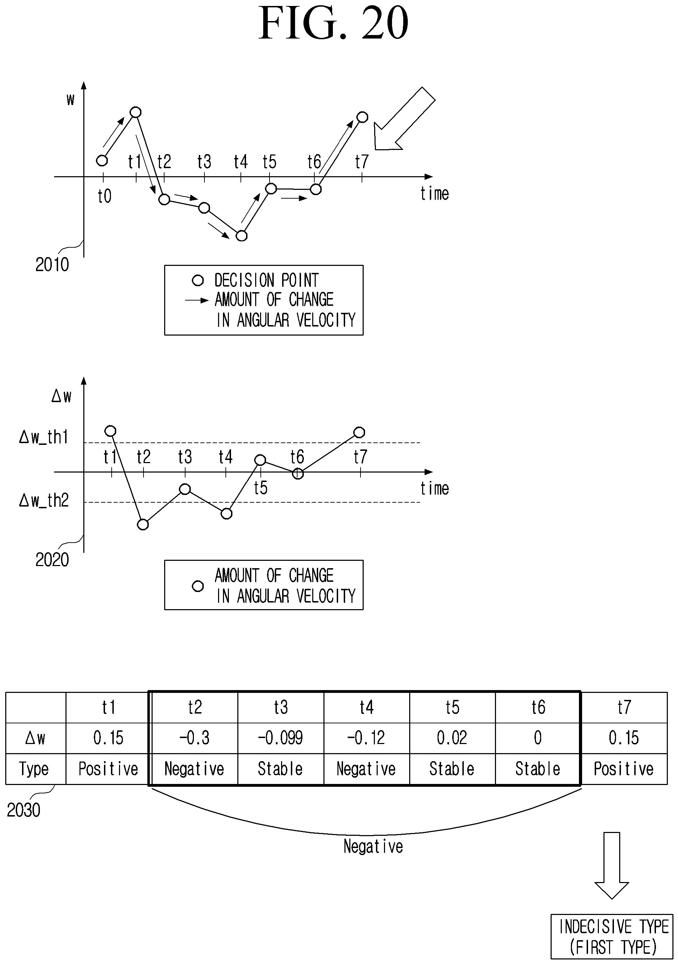

FIG. 20 is a view for explaining an operation of identifying the classification information in consideration of the amount of change in the angular velocity that is stored for the predetermined period in various examples.

Graph 2010 of FIG. 20 shows the angular velocity over time. Graph 2010 shows the angular velocity from time point t0 to time point t7. The movable robot 100 may obtain the amount of change in the angular velocity based on the angular velocity of the plurality of candidate motions at time point t7.

Graph 2020 of FIG. 20 shows the amount of change in the angular velocity over time. Graph 2020 shows the amount of change in the angular velocity from time point t1 to time point t7. The movable robot 100 may identify the state information based on the amount of change in the angular velocity of each of the plurality of candidate motions at time point t7.

Table 2030 of FIG. 20 shows the state information over time. Table 2030 shows the state information from time point t1 to time point t7. The movable robot 100 may identify the state information at the previous time point based on the predetermined period.

For example, it is assumed that the predetermined period is 5 units of time. The movable robot 100 may identify that the predetermined state information is the second (or negative number) state based on the state information corresponding to each of time points t2 to t6. The reason is that the first (or positive number) state is not identified and only the second (or negative number) state is identified from time points t2 to t6. In addition, it is assumed that the state information of the candidate motion is the first (or positive number) state. The predetermined state information may be the second (or negative number) state and the state information of the candidate motion may be the first (or positive number) state, and the movable robot 100 may thus determine the classification information of the candidate motion as the indecisive classification (or the first classification).

FIG. 21 is a view for explaining an example of identifying the final motion based on the driving score.

Example 2110 of FIG. 21 may show the movable robot 100, the obstacle 20, and the goal 10. The movable robot 100 may provide the driving path to move to the goal 10 by avoiding the obstacle 20. In providing the driving path, the movable robot 100 may calculate the driving score corresponding to each of the plurality of candidate motions.

Equation 2120 of FIG. 21 shows a calculation method of the driving score. The driving score may be calculated as W_obs*C_obs - W_goal*D_goal based on Equation 2120.

Here, w^i indicates the angular velocity of the candidate motion.

Here, v^j indicates the linear velocity of the candidate motion.

Here, W_obs indicates a weight corresponding to C_obs.

Here, C_obs indicates a distance (i.e., length of an arc or length of a straight line) from the position of the movable robot 100 to the position of the obstacle 20 within a predicted trajectory of the movable robot 100. In various examples, C_obs may indicate the distance that the movable robot 100 is required to move to avoid the obstacle 20.

Here, W_goal indicates a weight corresponding to D_goal.

Here, D_goal indicates a distance from the predicted point of the movable robot 100 to the goal 10. The predicted point may be a point where the movable robot 100 may be positioned after avoiding the obstacle 20 within the predicted trajectory.

Here, W_obs and W_goal may each have a value greater than zero.

Equation 2130 of FIG. 21 shows a calculation method for selecting the final motion.

Desired Velocity (w, v) indicates the final motion.

Here, w indicates the angular velocity of the final motion.

Here, v indicates the linear velocity of final motion.

Here, argmaxScore(w^i, v^j) may indicate a function for finding the angular velocity and the linear velocity, each having the maximum driving score, among the plurality of candidate motions including the angular velocities and the linear velocities.

Here, w^i indicates the angular velocity of the candidate motion, and indicates a value included in W_List.

Here, v^j indicates the linear velocity of the candidate motion, and indicates a value included in V_List.

Here, W_List may indicate an angular velocity range of the candidate motion that indicates the predetermined space (or the valid search space).

Here, V_List may indicate the angular velocity range of the candidate motion that indicates the predetermined space (or the valid search space).

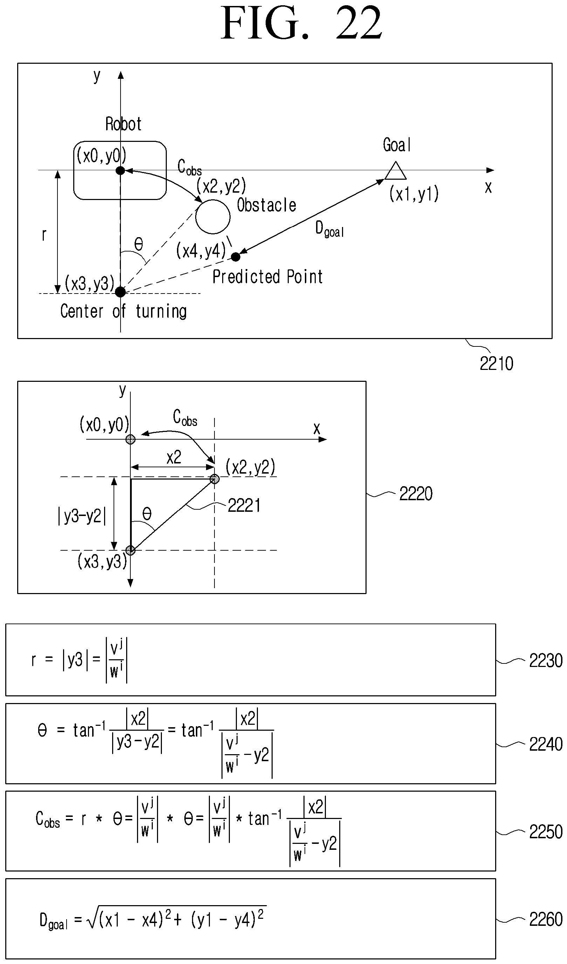

FIG. 22 is a view for explaining a process of calculating the driving score in various examples.

Example 2210 of FIG. 22 may show the movable robot 100, the obstacle 20, and the goal 10. Example 2210 of FIG. 22 shows a situation where the obstacle 20 exists on the right in the driving direction of the movable robot 100.

A point where the movable robot 100 is positioned may be (x0, y0), the goal may be (x1, y1), and a point where the obstacle is positioned may be (x2, y2). The movable robot 100 may identify a virtual center point (or center of turning) as (x3, y3) based on the angular velocity of the candidate motion and the linear velocity of the candidate motion. The movable robot 100 may identify the predicted trajectory based on the virtual center point and a turning radius "r." In addition, the movable robot 100 may identify the predicted point as (x4, y4) within the predicted trajectory. In addition, the movable robot 100 may identify an angle θ between the movable robot 100 and the obstacle 20 within the predicted trajectory. In addition, the movable robot 100 may identify the distance C_obs from the position of the movable robot 100 to the position of the obstacle 20 within the predicted trajectory of the movable robot 100. In addition, the movable robot 100 may identify the distance D_goal from the predicted point of the movable robot 100 to the goal 10.

Graph 2220 of FIG. 22 may be a two-dimensional graph for showing example 2210. In graph 2220, θ may be identified through an imaginary triangle 2221.

Equation 2230 may show a calculation method for finding the virtual center point. The virtual center point may be a point moved along a y-axis by the turning radius r from the position (x0, y0) of the movable robot 100. The turning radius r may indicate y3. In addition, the turning radius r may be |v^j/w^i|.

Equation 2240 shows a method of calculating the angle θ between the movable robot 100 and the obstacle 20 within the predicted trajectory. According to the imaginary triangle 2221, the angle θ may be tan-1(|x2|/|y3-y2|). In addition, the angle θ may be tan^-1 (|x2|/||v^j/w^i|-y2|) in consideration of Equation 2230 for r.

Equation 2250 shows a method of calculating the distance C_obs. The distance C_obs may be r*θ. In addition, the distance C_obs may be |v^j/w^i| in consideration of Equation 2230 for r. In addition, the distance C_obs may be |v^j/w^i|* tan^-1(|x2|/|v^j/w^i|-y2|) in consideration of Equation 2240 for θ.

Equation 2260 shows a method of calculating the distance D_goal. The distance D_goal may be root((x1-x4)^2+(y1-y4)^2).

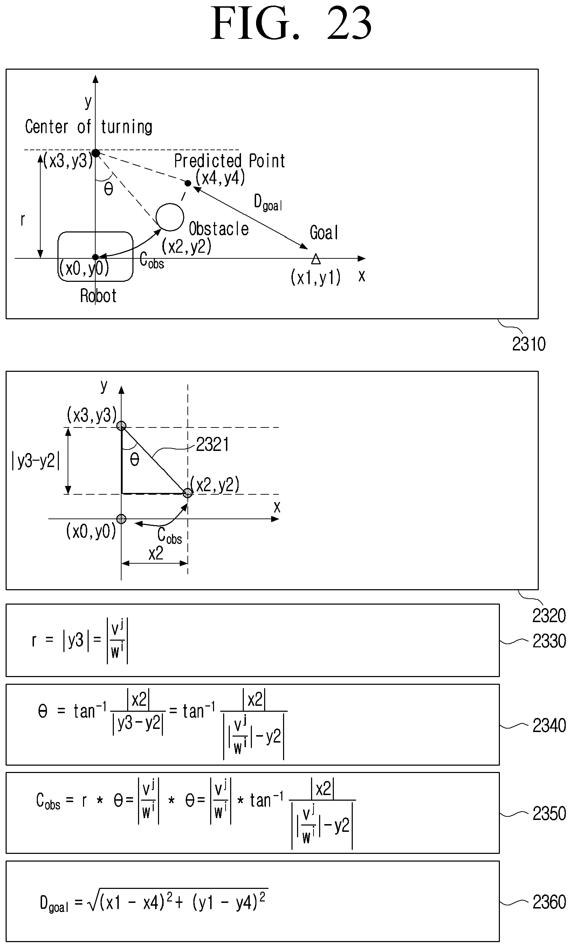

FIG. 23 is a view for explaining a process of calculating the driving score in various examples.

Example 2310 of FIG. 23 may show the movable robot 100, the obstacle 20, and the goal 10. Example 2310 of FIG. 23 shows a situation where the obstacle 20 exists on the left in the driving direction of the movable robot 100.

The point where the movable robot 100 is positioned may be (x0, y0), the goal may be (x1, y1), and the point where the obstacle is positioned may be (x2, y2). The virtual center point may be (x3, y3), and the predicted point within the predicted trajectory may be (x4, y4). The angle between the movable robot 100 and the obstacle 20 within the predicted trajectory may be θ, the distance from the position of the movable robot 100 to the position of the obstacle 20 within the predicted trajectory may be C_obs, and the distance from the predicted point to goal 10 may be D_goal. Descriptions thereof are provided with reference to FIG. 23, and the description omits redundant descriptions thereof.

Graph 2320 of FIG. 23 may be a two-dimensional graph for showing example 2310. In graph 2320, θ may be identified through an imaginary triangle 2321.

Equations 2330, 2340, 2350, and 2360 of FIG. 23 may correspond to Equations 2230, 2240, 2250, and 2260 of FIG. 22. Therefore, the description omits redundant descriptions thereof.

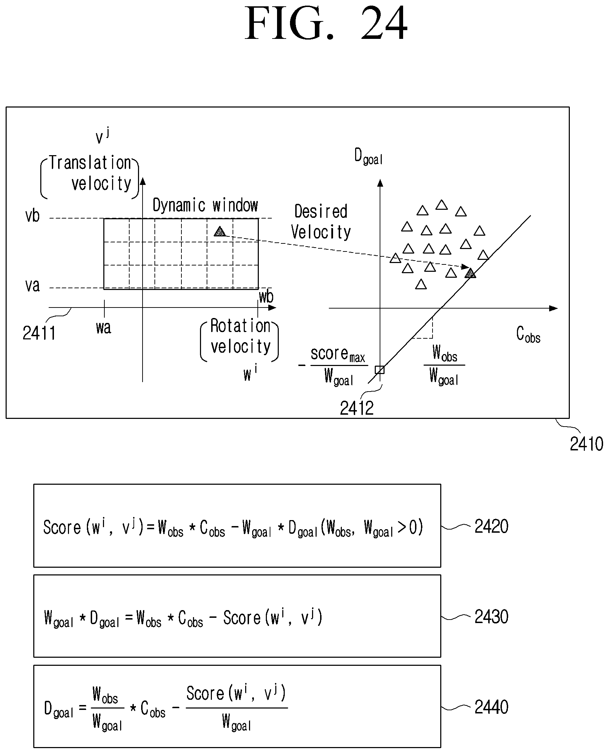

FIG. 24 is a view for explaining a process of calculating the maximum value of the driving score in various examples.

Example 2410 of FIG. 24 is a graph showing a process of finding the maximum value of the driving score. Graph 2411 may show the angular velocity of the candidate motion and the linear velocity of the candidate motion, included in a specific valid search space. In the valid search space, a range of the angular velocity of the candidate motion may be wa to wb, and a range of the linear velocity of the candidate motion may be va to vb.

Equation 2420 of FIG. 24 may correspond to Equation 2120 of FIG. 21. Therefore, the description omits a redundant description thereof. Here, equation 2430 may be an equation arranging Equation 2420 as W_goal*D_goal.

Here, equation 2440 may be an equation arranging Equation 2430 as D_goal. According to equation 2440, graph 2412 may have C_obs on the x-axis and D_goal on the y-axis. The maximum driving score may be calculated considering a y-axis intercept of each candidate motion in graph 2412.

FIG. 25 is a view for explaining an operation of identifying, as the final motion, the motion corresponding to one of the indecisive classification and the decisive classification.

Referring to FIG. 25, the movable robot 100 may obtain the maximum value of the driving score for each of the classification of information. In detail, the movable robot 100 may classify the plurality of candidate motions into the indecisive classification (or the first classification) or the decisive classification (or the second classification).

The movable robot 100 may identify the candidate motion (or the first motion) having the maximum driving score from the candidate motions classified as the indecisive classification (or the first classification). The maximum driving score obtained in the indecisive classification (or the first classification) may be described as S_i. In addition, the movable robot 100 may identify the candidate motion (or the second motion) having the maximum driving score from the candidate motions classified as the decisive classification (or the second classification). The maximum driving score obtained in the decisive classification (or the second classification) may be described as S_d.

The movable robot 100 may identify the final motion based on the driving score S_i of the first motion and the driving score S_d of the second motion. The movable robot 100 may obtain a value (S_d + S_adv) obtained by adding up the second motion driving score S_d and a threshold driving score S_adv. In addition, the movable robot 100 may identify the final motion by comparing the driving score (S_i) of the first motion and the sum value (S_d + S_adv).

As shown in example 2510, in case that the driving score S_i of the first motion is more than the sum value (S_d + S_adv), the movable robot 100 may identify, as the final motion, the first motion corresponding to the driving score S_i.

As shown in example 2520, in case that the driving score S_i of the first motion is the sum value (S_d + S_adv) or less, the movable robot 100 may identify, as the final motion, the second motion corresponding to the driving score S_d.

As shown in example 2530, the movable robot 100 may increase a probability of selecting the candidate motion classified as the decisive classification by additionally considering the threshold driving score S_adv. The greater the threshold driving score S_adv, the higher the probability of selecting the candidate motion classified as the decisive classification (or the second classification).

In example 2530, the x-axis may indicate the driving score S_i of first motion (classified as the indecisive classification) and the y-axis may indicate the linear velocity. Here, V_i may be the linear velocity of the first motion (classified as the indecisive classification) and V_d may be the linear velocity of the second motion (classified as the decisive classification). In case that the driving score S_i of the first motion is more than the sum value (S_d + S_adv) (or is the sum value (S_d + S_adv) or more), the movable robot 100 may control the motor to have the linear velocity V_i of the first motion (classified as the indecisive classification). In addition, in case that the driving score S_i of the first motion is not more than the sum value (S_d + S_adv), the movable robot 100 may control the motor to have the linear velocity V_d of the second motion (classified as the decisive classification). A region from S_d to S_d+S_adv may be expressed as an activation region. The activation region may be a region where the motor is controlled to have the linear velocity V_d of the second motion (classified as the decisive classification) even in case that the driving score is greater than the driving score S_d of the second motion.

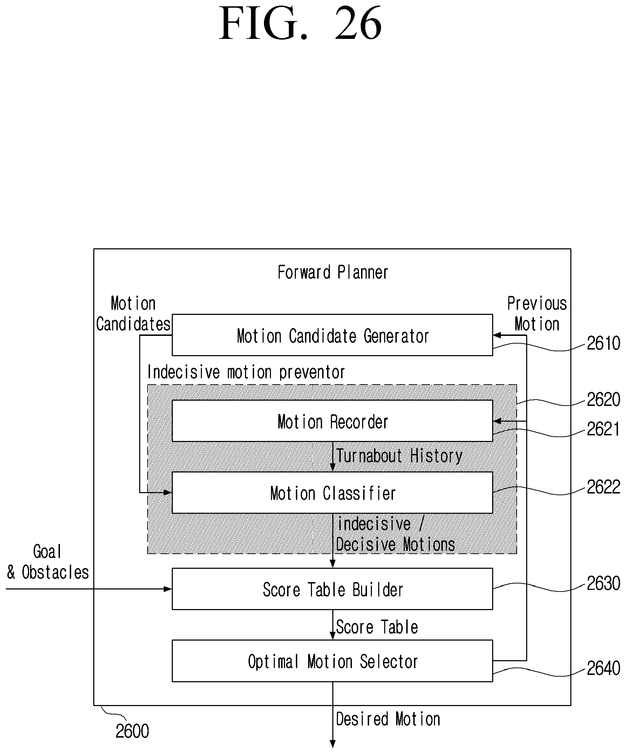

FIG. 26 is a view explaining an overall operation process of selecting one motion from the plurality of candidate motions as the final motion.

Referring to FIG. 26, the movable robot 100 may include a driving path provision module 2600. Here, the driving path generating module 2600 may be described as a "forward planner." The driving path provision module 2600 may include at least one of a motion candidate provision module 2610(or Motion Candidate Generator), a motion analysis module 2620, a score table provision module 2630(or Score Table Builder), and a motion selection module 2640 (or Optimal Motion Selector).

The motion candidate provision module 2610 may be a module providing the plurality of candidate motions which may be identified in the valid search space (or a dynamic window).

The motion analysis module 2620 may include at least one of a motion recorder 2621 and a motion classifier 2622. The motion recorder 2621 may store the linear velocity or angular velocity information that the movable robot 100 actually drives. The motion recorder 2621 may store information on the motion. The motion classifier 2622 may classify the classification information of the motion by comparing motion records stored in the motion recorder 2621 with the candidate motions provided by the motion candidate provision module 2610.

The score table provision module 2630 may provide the driving score for each of the plurality of candidate motions.

The motion selection module 2640 may identify the final motion based on the provided driving score. In detail, the movable robot 100 may select the optimal final motion based on the classification information classified by the motion classifier 2622 and the driving score provided by the score table provision module 2630.

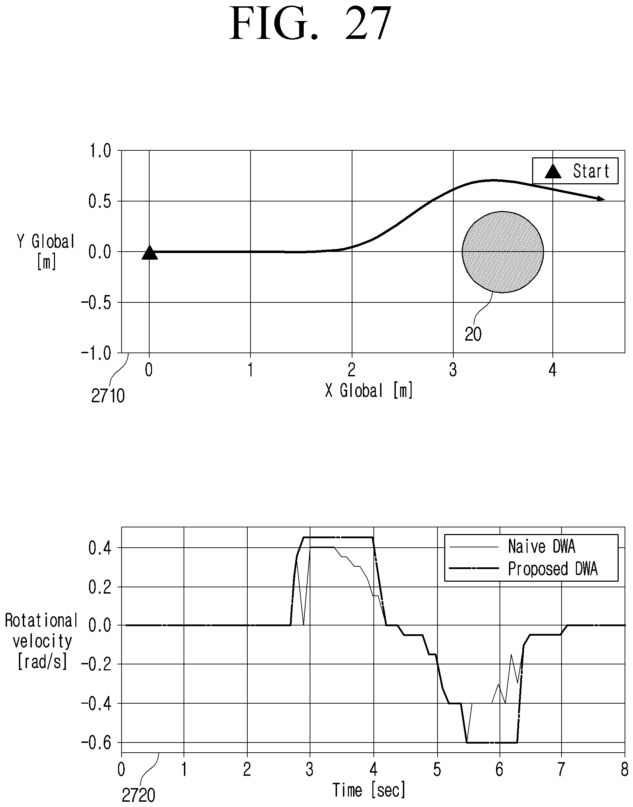

FIG. 27 is a view for explaining changes in the position and angular velocity of the movable robot 100 as the robot moves.

Graph 2710 of FIG. 27 is a two-dimensional coordinate system showing the driving path of the movable robot 100. As shown in graph 2710, the movable robot 100 may start from a starting point and move to the left of the obstacle 20.

Graph 2720 of FIG. 27 shows the angular velocity over time. In the case of driving in the normal driving mode, the robot may have the angular velocity rapidly changed at around 3 seconds and around 6 seconds. However, in case that driving in the soft driving mode (i.e., driving mode in consideration of the amount of change in the angular velocity), the robot may have the angular velocity constantly maintained at around 3 seconds and around 6 seconds. Therefore, the movable robot 100 may have increased driving stability.

FIG. 28 is a flowchart for explaining the movable robot 100 operating in the soft driving mode.

Referring to FIG. 28, the movable robot 100 may obtain the amount of change in the angular velocity corresponding to each of the plurality of candidate motions (S2805). The movable robot 100 may then drive in the soft driving mode (S2810). The movable robot 100 may basically always drive in the soft driving mode. Here, the soft driving mode may be a driving mode in consideration of the amount of change in the angular velocity in addition to the minimum time or the minimum distance. The description describes the driving operation in consideration of the amount of change in the angular velocity with reference to FIGS. 5 to 12.

FIG. 29 is a view for comparing the normal driving mode and the soft driving mode.

Referring to FIG. 29, the movable robot 100 may provide a user with a user interface (UI) screen 2900 for guiding selection of the driving mode. The UI screen 2900 may include at least one of text information 2910 indicating selection of the driving mode, or a UI 2910 describing the normal driving mode and a UI 2920 describing the soft driving mode.

The UI 2910 describing the normal driving mode may include at least one of text information 2911 indicating that the robot drives based on the shortest path (or the minimum time) or guide image information 2912 indicating a representative example of the driving path in the normal driving mode. Here, the image information 2912 may include an image of the representative example. In various examples, the image information 2912 may include an image of the driving path actually expected.

The UI 2920 describing the soft driving mode may include at least one of text information 2921 indicating that the robot drives based on the shortest path (or the minimum time) or guide image information 2922 indicating a representative example of the driving path in the soft driving mode. Here, the image information 2922 may include an image of the representative example. In various examples, the image information 2922 may include an image of the driving path actually expected.

FIG. 30 is a view for explaining an indicator related to the soft driving mode.

As shown in example 3010 of FIG. 30, the movable robot 100 may display an indicator 3011 indicating the soft driving mode. The movable robot 100 may operate in the normal driving mode or the soft driving mode based on the user setting. In case of operating in the soft driving mode, the movable robot 100 may display the indicator 3011. An operation of displaying the indicator 3011 may indicate emitting a light emitting diode (LED) disposed at a specific position.

As shown in example 3020 of FIG. 30, the movable robot 100 may include the display 140. In addition, in case of operating in the soft driving mode, the movable robot 100 may display, on the display 140, the indicator indicating that the movable robot 100 drives in the soft driving mode. Here, the indicator may include at least one of text information 3021 or an icon 3022.

FIG. 31 is a flowchart for explaining an operation of driving the robot in the soft driving mode in various examples.

Referring to FIG. 31, the movable robot 100 may obtain the amount of change in the angular velocity corresponding to each of the plurality of candidate motions (S3105). The movable robot 100 may then identify whether the obstacle exists (S3110). The movable robot 100 may identify whether the obstacle exists on the driving path of the movable robot 100 based on the sensing data obtained from the sensor 110.

In case of identifying the obstacle (S3110-Y), the movable robot 100 may drive in the soft driving mode (S3115). The soft driving mode may be a mode in which the driving path of the movable robot 100 is set based on the amount of change in the angular velocity.

In case of identifying no obstacle (S3110-N), the movable robot 100 may drive in the normal driving mode (S3120). The normal driving mode may be a mode in which the driving path of the movable robot 100 is set based on the minimum distance or the minimum time.

FIG. 32 is a flowchart for explaining an operation of driving the robot in the soft driving mode in various examples.

Referring to FIG. 32, the movable robot 100 may obtain the amount of change in the angular velocity corresponding to each of the plurality of candidate motions (S3205). The movable robot 100 may then identify whether the amount of change in the angular velocity is changed from the positive number to the negative number (S3210).

In case that the amount of change in the angular velocity is changed from the positive number to the negative number (S3210-Y), the movable robot 100 may drive in the soft driving mode (S3215).

In case that the amount of change in the angular velocity is not changed from the positive number to the negative number (S3210-N), the movable robot 100 may identify whether the amount of change in the angular velocity is changed from the negative number to the positive number (S3220). In case that the amount of change in the angular velocity is changed from the negative number to the positive number (S3220-Y), the movable robot 100 may drive in the soft driving mode (S3215).

In case that the amount of change in the angular velocity is not changed from the negative number to the positive number (S3220-N), the movable robot 100 may drive in the normal driving mode.

That is, the movable robot 100 may drive in the soft driving mode only in case that the amount of change in the angular velocity is changed from the positive number to the negative number or the amount of change in the angular velocity is changed from the negative number to the positive number. The actual movement direction may not be immediately changed and the velocity may be reduced even in case that the sign (or the negative or positive number) of the amount of change in the angular velocity is changed. Accordingly, the movable robot 100 may determine the possibility that its movement direction is rapidly changed based on the change in the sign (or the negative or positive number) of the amount of change in the angular velocity. In addition, in case of identifying the change in the sign (or the negative or positive number) of the angular velocity, the movable robot 100 may maintain the movement direction as much as possible by driving in the soft driving mode.

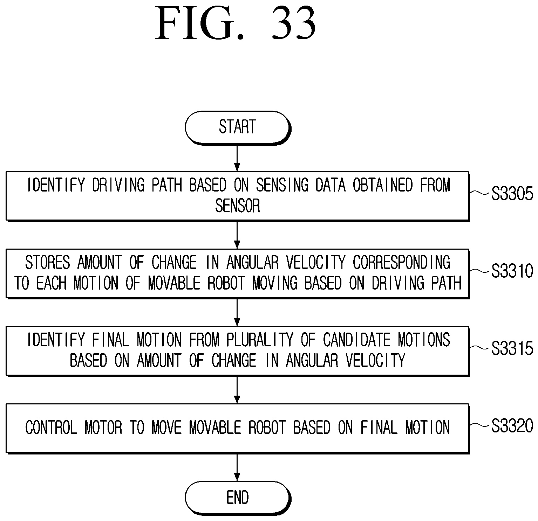

FIG. 33 is a flowchart for explaining a controlling method of a movable robot according to another embodiment of the disclosure.

Referring to FIG. 33, the controlling method of a movable robot 100 may include: obtaining a driving path of the movable robot 100; identifying an amount of change in an angular velocity corresponding to each motion of the movable robot 100 moving along the driving path based on sensing data obtained from a sensor; identifying a final motion from a plurality of candidate motions based on the amount of change in the angular velocity; and controlling the movable robot 100 to move based on the final motion.

Meanwhile, the identifying of the final motion may include identifying state information of the candidate motion based on the amount of change in the angular velocity of the candidate motion, identifying classification information of the candidate motion based on whether the state information is changed, obtaining a driving score corresponding to the candidate motion, and identifying the final motion from the plurality of candidate motions based on the driving score and the classification information.

Meanwhile, in the identifying of the state information, the state information of a previous time-point motion may be identified based on the angular velocity of the previous time-point motion, and the state information of the candidate motion may be identified based on a difference between the angular velocity of the previous time-point motion and the angular velocities of the plurality of candidate motions, and in the identifying of the classification information, the classification information of the candidate motion may be identified based on the state information of the previous time-point motion and the state information of the candidate motion.

Meanwhile, the driving score may have a greater value as the movable robot 100 moving based on the candidate motion has a greater movement distance to avoid an obstacle, and may have a greater value as the movable robot 100 has a smaller distance to a predicted point or a goal, in which the movable robot is positioned, after avoiding the obstacle.

Meanwhile, in the identifying of the state information, the state information of the candidate motion may be identified as a first (or positive number) state in case that the amount of change in the angular velocity of the candidate motion is more than a first threshold value, the state information of the candidate motion may be identified as a second (or negative number) state in case that the amount of change in the angular velocity of the candidate motion is less than a second threshold value smaller than the first threshold value, and the state information of the candidate motion may be identified as a third (stable) state in case that the amount of change in the angular velocity of the candidate motion is the first threshold value or less and more than the second threshold value.

Meanwhile, in the identifying of the classification information, the classification information of the candidate motion may be identified as a first classification in case that the state information of the candidate motion is changed from the first (or positive number) state to the second (or negative number) state, or the state information of the candidate motion is changed from the second (or negative number) state to the first (or positive number) state, and the classification information of the candidate motion may be identified as a second classification in case that the state information of the candidate motion is changed from the first (or positive number) state to the third (or stable) state, the state information of the candidate motion is changed from the second (or negative number) state to the third (or stable) state, the state information of the candidate motion is changed from the third (or stable) state to the first (or positive number) state, or the state information of the candidate motion is changed from the third (or stable) state to the second (or negative number) state. Here, the first classification may be a classification in which the state information of the candidate motion is changed relatively rapidly compared to the second classification.

Meanwhile, in the identifying of the classification information, the classification information of the candidate motion may be identified based on the state information obtained in a predetermined period.

Meanwhile, in the identifying of the final motion, a first motion having the maximum driving score may be identified from at least one candidate motion identified as the first classification, a second motion having the maximum driving score may be identified from at least one candidate motion identified as the second classification, and either the first motion or the second motion may be identified as the final motion.

Meanwhile, in the identifying of the final motion, the first motion may be identified as the final motion in case that a first driving score of the first motion is more than the sum of the second driving score of the second motion and a threshold driving score, and the second motion may be identified as the final motion in case that the first driving score of the first motion is the sum of the second driving score of the second motion and the threshold driving score or less.

Meanwhile, the method may further include controlling the movable robot 100 to move based on the soft driving mode for identifying the final motion from the plurality of candidate motions based on the amount of change in the angular speed in case that the amount of change in the angular speed is changed from the positive number to the negative number or the amount of change in the angular speed is changed from the negative number to the positive number.

Meanwhile, the controlling method of the movable robot 100 as shown in FIG. 33 may be performed on the movable robot 100 having the configuration of FIG. 2 or 3, and may also be performed on an electronic device having another configuration.

Meanwhile, the methods according to the various embodiments of the disclosure described above may be implemented in the form of an application which may be installed on the existing movable robot 100.

In addition, the methods according to the various embodiments of the disclosure described above may be implemented only by software upgrade or hardware upgrade for the existing movable robot 100.

In addition, the various embodiments of the disclosure described above may be performed through an embedded server included in the movable robot 100, or an external server of at least one of the movable robot 100 and a display device.

Meanwhile, according to an embodiment of the disclosure, the various examples described above may be implemented by software including an instruction stored in a machine-readable storage medium (for example, a computer-readable storage medium). A machine may be a device that invokes the stored instruction from the storage medium and operates based on the invoked instruction, and may include the movable robot 100 according to the disclosed embodiments. In case that the instruction is executed by the processor, the processor may directly perform a function corresponding to the instruction or other components may perform the function corresponding to the instruction under a control of the processor. The instruction may include codes provided or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

In addition, according to another embodiment of the disclosure, the method in the various examples described above may be provided by being included in a computer program product. The computer program product may be traded as a product between a seller and a purchaser. The computer program product may be distributed in a form of a storage medium (for example, a compact disc read only memory (CD-ROM)) that may be read by the machine or online through an application store (for example, PlayStoreTM). In case of the online distribution, at least portions of the computer program product may be at least temporarily stored in a storage medium such as a memory of a server of a manufacturer, a server of an application store or a relay server, or be temporarily provided.

In addition, each of the components (for example, modules or programs) according to the various embodiments described above may include a single entity or a plurality of entities, and some of the corresponding sub-components described above may be omitted or other sub-components may be further included in the various embodiments. Alternatively or additionally, some of the components (for example, the modules or the programs) may be integrated into one entity, and may perform functions performed by the respective corresponding components before being integrated in the same or similar manner. Operations performed by the modules, the programs or other components according to the various embodiments may be executed in a sequential manner, a parallel manner, an iterative manner or a heuristic manner, at least some of the operations may be performed in a different order or be omitted, or other operations may be added.

Although the embodiments of the disclosure are shown and described hereinabove, the disclosure is not limited to the above-mentioned specific embodiments, and may be variously modified by those skilled in the art to which the disclosure pertains without departing from the scope and spirit of the disclosure as disclosed in the accompanying claims. These modifications also need to be understood to fall within the scope of the disclosure.

## Claims

1. A movable robot comprising:
a sensor;
a motor configured to drive the movable robot; and
at least one processor configured to:
obtain a driving path of the movable robot,
determine an amount of change in angular velocity corresponding to each of a plurality of candidate motions of the movable robot moving along the driving path based on sensing data obtained from the sensor,
determine a final motion from the plurality of candidate motions based on the amount of change in angular velocity corresponding to each of the plurality of candidate motions, and
control the motor to move the movable robot based on the final motion.

2. The movable robot as claimed in claim 1, wherein the at least one processor is further configured to:
determine state information of each of the plurality of candidate motions based on the amount of change in angular velocity corresponding to each of the plurality of candidate motions,
determine classification information of each of the plurality of candidate motions based on whether the state information of each of the plurality of candidate motions is changed, and
calculate a driving score for each of the plurality of candidate motions,
determine the final motion from the plurality of candidate motions based on the driving score for each of the plurality of candidate motions and the classification information of each of the plurality of candidate motions.

3. The movable robot as claimed in claim 2, wherein the at least one processor is further configured to:
identify state information of a previous time-point motion based on an angular velocity of the previous time-point motion,
determine the state information of each of the plurality of candidate motions based on a difference between the angular velocity of the previous time-point motion and an angular velocity of each of the plurality of candidate motions, and
determine the classification information of each of the plurality of candidate motions based on the state information of the previous time-point motion and the state information of each of the plurality of candidate motions.

4. The movable robot as claimed in claim 2,
wherein the driving score increases in value as a movement distance of the movable robot to avoid an obstacle along any particular candidate motion of the plurality of candidate motions increases, and
wherein the driving score increases in value as a distance of the movable robot to a predicted point or a goal, in which the movable robot is positioned, after avoiding the obstacle decreases.

5. The movable robot as claimed in claim 2, wherein the at least one processor is further configured to:
determine that the state information of any particular candidate motion of the plurality of candidate motions a first state when the amount of change in angular velocity corresponding to the particular candidate motion is more than a first threshold value,
determine that the state information of the particular candidate motion is a second state when the amount of change in angular velocity corresponding to the particular candidate motion is less than a second threshold value, the second threshold value being smaller than the first threshold value, and
determine that the state information of the particular candidate motion is a third state when the amount of change in angular velocity corresponding to the particular candidate motion is less than or equal to the first threshold value and more than the second threshold value.

6. The movable robot as claimed in claim 5, wherein the at least one processor is further configured to:
determine that the classification information of the particular candidate motion is a first classification when the state information of the particular candidate motion is changed from the first state to the second state or from the second state to the first state, and
determine that the classification information of the particular candidate motion is a second classification when the state information of the particular candidate motion is changed from the first state to the third state, from the second state to the third state, from the third state to the first state, or from the third state to the second state,
wherein the first classification is a classification in which the state information of the particular candidate motion is changed relatively rapidly compared to the second classification.

7. The movable robot as claimed in claim 6, wherein the at least one processor is further configured to determine the classification information of the particular candidate motion based on the state information of the particular candidate motion obtained within a predetermined time period.

8. The movable robot as claimed in claim 6, wherein the at least one processor is further configured to:
identify a first motion having the driving score of highest value from the plurality of candidate motions determined to have the first classification,
identify a second motion having the driving score of highest value from the plurality of candidate motions determined to have the second classification, and
determine either the first motion or the second motion to be the final motion.

9. The movable robot as claimed in claim 8,
wherein the driving score of the first motion is a first driving score;
wherein the driving score of the second motion is a second driving score; and
wherein the at least one processor is configured to:
determine the first motion to be the final motion when the first driving score is more than a sum of the second driving score and a threshold driving score, and
determine the second motion to be the final motion when the first driving score is the less than or equal to the sum of the second driving score and the threshold driving score.

10. The movable robot as claimed in claim 1, wherein the at least one processor is configured to:
control the motor to move the movable robot based on the final motion and control the motor to move the movable robot based on a soft driving mode when the amount of change in angular velocity is changed from a positive number to a negative number or from the negative number to the positive number.

11. A controlling method of a movable robot, the method comprising:
obtaining a driving path of the movable robot;
determining an amount of change in angular velocity corresponding to each of a plurality of candidate motions of the movable robot moving along the driving path based on sensing data obtained from a sensor;
determining a final motion from the plurality of candidate motions based on the amount of change in angular velocity corresponding to each of the plurality of candidate motions; and
controlling the movable robot to move based on the final motion.

12. The method as claimed in claim 11, further comprising:
determining state information of each of the plurality of candidate motions based on the amount of change in angular velocity corresponding to each of the plurality of candidate motions,
determining classification information corresponding to each of the plurality of candidate motions based on whether the state information of each of the plurality of candidate motions is changed, and
calculating a driving score for each of the plurality of candidate motions,
determining the final motion from the plurality of candidate motions based on the driving score for each of the plurality of candidate motions and the classification information of each of the plurality of candidate motions.

13. The method as claimed in claim 12, further comprising:
identifying state information of a previous time-point motion is identified based on an angular velocity of the previous time-point motion,
wherein the determining the state information comprises:
determining the state information of each of the plurality of each of the plurality of candidate motions based on a difference between the angular velocity of the previous time-point motion and an angular velocity of each of the plurality of candidate motions, and
wherein the determining the classification information comprises:
determining the classification information of each of the plurality of candidate motions based on the state information of the previous time-point motion and the state information of each of the plurality of candidate motions.

14. The method as claimed in claim 12,
wherein the driving score increases in value as a movement distance of the movable robot to avoid an obstacle along any particular candidate motion of the plurality of candidate motions increases, and
wherein the driving score increases in value as a distance of the movable robot to a predicted point or a goal, in which the movable robot is positioned, after avoiding the obstacle decreases.

15. The method as claimed in claim 12, wherein the determining the state information comprises:
determining that the state information of any particular candidate motion of the plurality of candidate motions is a first state when the amount of change in angular velocity corresponding to the particular candidate motion is more than a first threshold value,
determining that the state information of the particular candidate motion is a second state when the amount of change in angular velocity corresponding to the particular candidate motion is less than a second threshold value, the second threshold value being smaller than the first threshold value, and
determining that the state information of the particular candidate motion is a third state when the amount of change in angular velocity corresponding to the particular candidate motion is less than or equal to the first threshold value and more than the second threshold value.
